(19) **Europäisches Patentamt / European Patent Office / Office européen des brevets**

(11) **EP 4 614 269 A1**

(12) **EUROPEAN PATENT APPLICATION**
published in accordance with Art. 153(4) EPC

(43) Date of publication:
**10.09.2025 Bulletin 2025/37**

(21) Application number: **23935015.0**

(22) Date of filing: **14.11.2023**

(51) International Patent Classification (IPC):
**G05D 1/00** $^{(2024.01)}$

(52) Cooperative Patent Classification (CPC):
**B25J 9/16; B25J 18/00; B62D 57/032**

(86) International application number:
**PCT/CN2023/131479**

(87) International publication number:
**WO 2024/221847 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.04.2023 CN 202310472257**

(71) Applicant: **Tencent Technology (Shenzhen)
Company Limited
Shenzhen, Guangdong 518057 (CN)**

(72) Inventors:
  • **LI, Jingchen**
    **Shenzhen, Guangdong 518057 (CN)**
  • **WANG, Shuai**
    **Shenzhen, Guangdong 518057 (CN)**
  • **LI, Xiong**
    **Shenzhen, Guangdong 518057 (CN)**
  • **ZHOU, Qinqin**
    **Shenzhen, Guangdong 518057 (CN)**
  • **WANG, Haitao**
    **Shenzhen, Guangdong 518057 (CN)**
  • **ZHANG, Dongsheng**
    **Shenzhen, Guangdong 518057 (CN)**
  • **XIANG, Lingzhu**
    **Shenzhen, Guangdong 518057 (CN)**
  • **ZHANG, Zhengyou**
    **Shenzhen, Guangdong 518057 (CN)**

(74) Representative: **Reddie & Grose LLP
The White Chapel Building
10 Whitechapel High Street
London E1 8QS (GB)**

(54) **METHOD AND APPARATUS FOR CONTROLLING MOBILE ROBOT, MOBILE ROBOT, AND STORAGE MEDIUM**

(57) The present application relates to the field of robots, and discloses a method and apparatus for controlling a mobile robot, a mobile robot, and a storage medium. The mobile robot comprises a first swing leg group and a second swing leg group; at least one of the first swing leg group and the second swing leg group comprises multiple swing legs; the first swing leg group and the second swing leg group are distributed side by side, and a rotating shaft of the first swing leg group and a rotating shaft of the second swing leg group are located in the same vertical plane. The method comprises: controlling the first swing leg group to be located on a first step or a first supporting surface, and controlling the second swing leg group to be located on a second step (320); by using the second swing leg group as a supporting leg, controlling the first swing leg group to swing to a third step (340); and by using the first swing leg group as a supporting leg, controlling the second swing leg group to swing to a fourth step (360). A solution for a mobile robot to go up and down stairs is provided.

```
┌─────────────────────────────────────────────────────────────┐ 320
│ Control a first swing leg group to be located on a first     │
│ support surface, and control a second swing leg group to be  │
│ located on a second support surface                          │
└─────────────────────────────────────────────────────────────┘
                            ↓
┌─────────────────────────────────────────────────────────────┐ 340
│ Control the first swing leg group to swing to a third        │
│ support surface by using the second swing leg group as a     │
│ support leg                                                  │
└─────────────────────────────────────────────────────────────┘
                            ↓
┌─────────────────────────────────────────────────────────────┐ 360
│ Control the second swing leg group to swing to a fourth      │
│ support surface by using the first swing leg group as a      │
│ support leg                                                  │
└─────────────────────────────────────────────────────────────┘
```

**FIG. 3**

# EP 4 614 269 A1

**Description**

RELATED APPLICATION

This application claims priority to Chinese Patent Application No. 202310472257.6, entitled "METHOD AND APPARATUS FOR CONTROLLING MOBILE ROBOT, DEVICE, AND STORAGE MEDIUM" filed on April 25, 2023.

FIELD OF THE TECHNOLOGY

This application relates to the field of computer technologies, and in particular, to a method and an apparatus for controlling a mobile robot, a mobile robot, and a storage medium.

BACKGROUND OF THE DISCLOSURE

Related technologies provide the following several staircase ascending methods for robots. (1) For a humanoid biped robot, the robot has two feet, and the two feet support the ground in turn to ascend a staircase. (2) For a quadruped robot, the robot ascends a staircase through four independently moving legs. (3) For crawler and ratchet robots, the robots ascend a staircase through by rolling a crawler and a ratchet. (4) A robot having planet gears, the robot ascends a staircase through revolutions of a plurality of planet gears.

The foregoing staircase ascending methods for the robots are only applicable to the robots with corresponding structures. When the structures of the robots change, the foregoing four methods are not applicable.

SUMMARY

Embodiments of this application provide a method and an apparatus for controlling a mobile robot, a mobile robot, and a storage medium, and provide a solution for the mobile robot to ascend/descend a staircase. The technical solution at least includes the following solution:

According to one aspect of this application, a method for controlling a mobile robot is provided. The mobile robot includes a first swing leg group and a second swing leg group. At least one of the first swing leg group and the second swing leg group includes a plurality of swing legs. The first swing leg group and the second swing leg group are arranged in a side-by-side manner, and a rotation shaft of the first swing leg group and a rotation shaft of the second swing leg group are located in the same plane. The method includes:

controlling the first swing leg group to be located on a first support surface, and controlling the second swing leg group to be located on a second support surface;

controlling the first swing leg group to swing to a third support surface by using the second swing leg group as a support leg; and

controlling the second swing leg group to swing to a fourth support surface by using the first swing leg group as a support leg.

According to one aspect of embodiments of this application, an apparatus for controlling a mobile robot is provided. The mobile robot includes a first swing leg group and a second swing leg group. At least one of the first swing leg group and the second swing leg group includes a plurality of swing legs. The first swing leg group and the second swing leg group are arranged in a side-by-side manner, and a rotation shaft of the first swing leg group and a rotation shaft of the second swing leg group are located in the same plane. The apparatus includes:

a control module, configured to control the first swing leg group to be located on a first support surface or a first support surface, and control the second swing leg group to be located on a second stair;

the control module is further configured to control the first swing leg group to swing to a third support surface by using the second swing leg group as a support leg; and

the control module is further configured to control the second swing leg group to swing to a fourth support surface by using the first swing leg group as a support leg.

According to one aspect of this application, a computer device is provided. The computer device includes a memory and a processor. The memory has at least one piece of program code stored therein, and the program code is loaded and executed by the processor to implement the method for controlling a mobile robot described above.

According to one aspect of this application, a computer-readable storage medium is provided. The storage medium has a computer program stored therein. The computer program is executed by a processor to implement the method for controlling a mobile robot described above.

According to one aspect of this application, a chip is provided. The chip includes a programmable logic circuit and/or program instruction, and is configured to implement the method for controlling a mobile robot described above when an electronic device installed with the chip runs.

According to one aspect of this application, a computer program product is provided. The computer program product includes a computer instruction, the computer instruction is stored in a computer-readable storage medium, and a processor reads and executes the computer instruction from the computer-readable storage medium to implement the method for controlling a mobile robot described above.

The technical solutions provided in the embodiments of this application produce at least the following beneficial effects:

Two swing leg groups (at least one of the two swing leg groups includes a plurality of swing legs) ascend/descend alternatively, and a solution for a mobile robot to ascend/descend is provided. In this solution, at least one swing leg group (the swing leg group including the plurality of swing legs) and a support surface form a plurality contact areas, so as to reduce difficulty in ascending or descending of the robot. The robot has a large stability margin, reduces a real machine implementation risk, and improving safety of the robot.

BRIEF DESCRIPTION OF THE DRAWINGS

FIG. 1 is a side view of a mobile robot according to an exemplary embodiment of this application.

FIG. 2 is a side view of a mobile robot according to an exemplary embodiment of this application.

FIG. 3 is a flowchart of a method for controlling a mobile robot according to an exemplary embodiment of this application.

FIG. 4 is a schematic diagram of a quasi-static staircase ascending action sequence according to an exemplary embodiment of this application.

FIG. 5 is a schematic diagram of a static staircase ascending action sequence according to an exemplary embodiment of this application.

FIG. 6 is a flowchart of a method for controlling a mobile robot according to an exemplary embodiment of this application.

FIG. 7 is a schematic diagram of a method for controlling a mobile robot when both two swing leg groups are in contact with a stair according to an exemplary embodiment of this application.

FIG. 8 is a schematic diagram of a method for controlling a mobile robot when both two swing leg groups are in contact with a stair according to an exemplary embodiment of this application.

FIG. 9 is a schematic diagram of a method for controlling a mobile robot when only one swing leg group is in contact with a stair according to an exemplary embodiment of this application.

FIG. 10 is a flowchart of a method for controlling a mobile robot according to an exemplary embodiment of this application.

FIG. 11 is a schematic diagram of a force analysis of a mobile robot according to an exemplary embodiment of this application.

FIG. 12 is a schematic diagram of an apparatus for controlling a mobile robot according to an exemplary embodiment of this application.

FIG. 13 is a block diagram of a mobile robot according to an exemplary embodiment of this application.

DESCRIPTION OF EMBODIMENTS

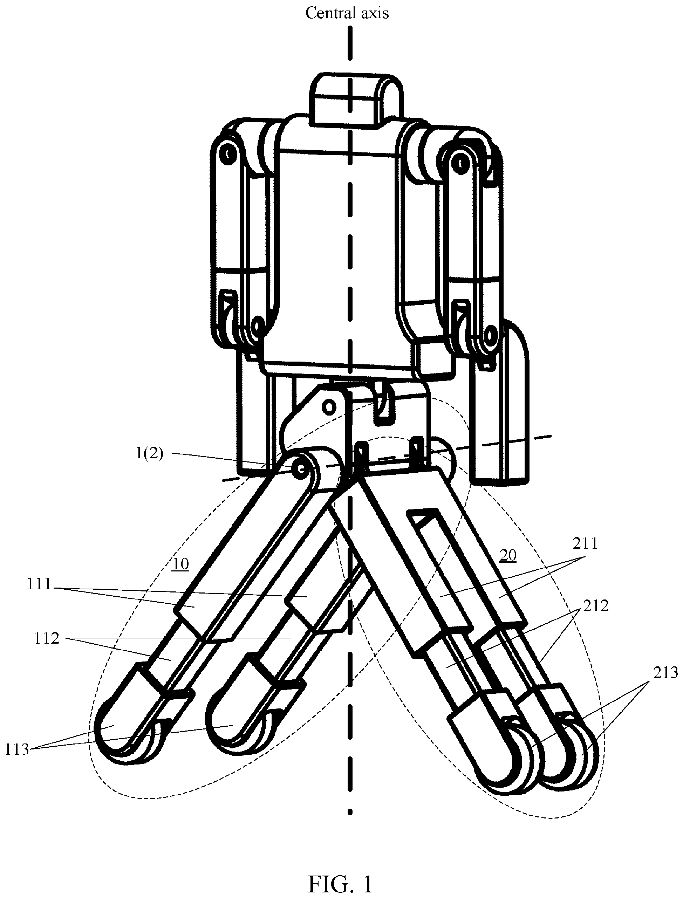

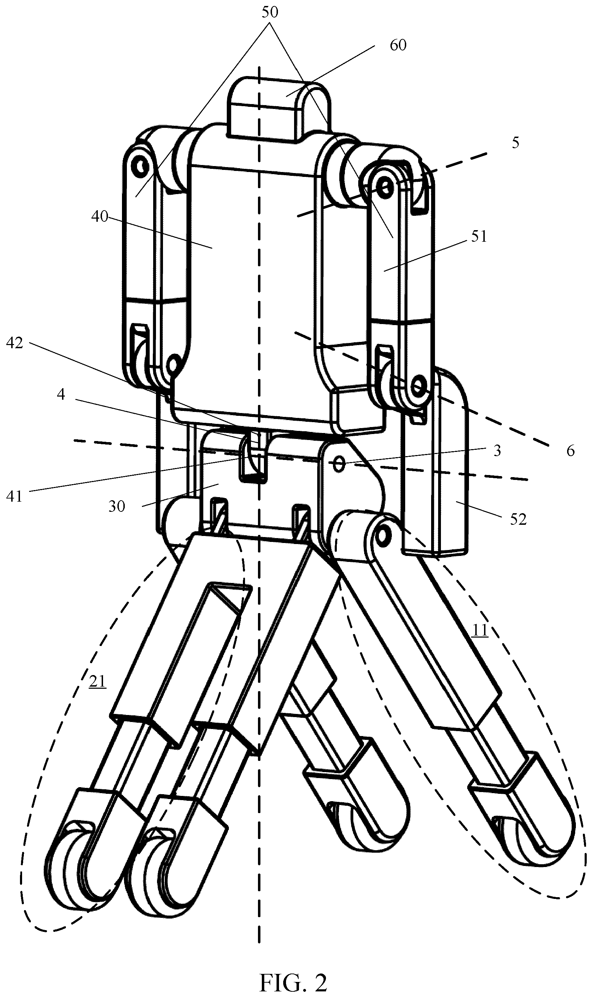

With reference to FIG. 1 and FIG. 2, it may be observed that a mobile robot according to this application includes at least three swing legs. The at least three swing legs are arranged in a side-by-side manner, and rotation shafts of the at least three swing legs are located in the same plane. In some embodiments, the side-by-side manner refers to a state in which the at least three swing legs of the mobile robot in a first direction do not overlap but overlap in a second direction. For example, projections of the at least three swing legs of the mobile robot do not overlap with each other in the first direction but overlap in the second direction. That the rotation shafts are located in the same plane refers to a state in which the at least three swing legs of the mobile robot in the second direction do not overlap. For example, the rotation shafts may be located in the same vertical plane, when the robot is standing vertically, or may be located in the same horizontal plane, when the robot is lying straight on the ground, or may be located in a plane at an angle with the ground depending on the pose (such as leaning forward or leaning backward) of the robot. The first direction refers to a front or back orientation of the mobile robot. The second direction refers to a side orientation of the mobile robot. In embodiments, rotation shafts of at least two of the at least three swing legs are coaxial. In embodiments, rotation shafts of the at least three swing legs are non-axial. In embodiments, the side-by-side manner refers to that the at least three swing legs do not overlap when viewed from the front or back orientation, but overlap when viewed from the side orientation, for example, when the robot stands on the ground with the at least three swing legs contacting the ground.

In some embodiments, the at least three swing legs are divided into a first swing leg group and a second swing leg group. In embodiments, the first swing leg group includes a plurality of first swing legs, the second swing leg group includes one second swing leg, at least two of the plurality of first swing legs are located on two sides of a central axis of the mobile robot, and the second swing leg is located on the central axis of the mobile robot. In embodiments, the second swing leg group includes a plurality of second swing legs, the first swing leg group includes one first swing leg, at least two of the plurality of second swing legs are located on two sides of a central axis of the mobile robot, and the first swing leg is located on the central axis of the mobile robot.

In some embodiments, the at least three swing legs are divided into a first swing leg group and a second swing leg group. In embodiments, the first swing leg group includes a plurality of first swing legs, the second swing leg group includes a plurality of second swing legs, and the plurality refers to a case of greater than or equal to two.

With reference to FIG. 1 and FIG. 2, FIG. 1 and FIG. 2 show side views of a mobile robot according to this application. The mobile robot includes a first swing leg group 10 and a second swing leg group 20. The first swing leg group 10 includes a plurality of first swing legs 11, the second swing leg group 20 includes a plurality of second swing legs 21, at least two of the plurality of first swing legs 11 are respectively located at two sides of a central axis of the mobile robot, and at least two of the plurality of second swing legs 21 are respectively located at two sides of the central axis of the mobile robot. The plurality of first swing legs 11 and the plurality of second swing legs 21 are arranged in a side-by-side manner. If the foregoing distribution condition is satisfied, further, the plurality of first swing legs 11 and the plurality of second swing legs 21 are distributed in a staggered manner one by one. In embodiments, the plurality of first swing legs 11 are distributed on two sides of the plurality of second swing legs 21.

Schematically, using an example in which the first swing leg group 10 is a group A of legs, and the second swing leg group 20 is a group B of legs, a case in which the plurality of first swing legs 11 and the plurality of second swing legs 21 are arranged in a side-by-side manner may be A1, B1, B2, and A2 (a distribution case 1); A1, B1, A2, and B2 (a distribution case 2); A1, A2, B1, A3, B2, and B3 (a distribution case 3); A1, A2, B1, B2, B3, A3 (a distribution case 4), and the like. Similarly, more or less swing legs may be arranged in a similar manner of being arranged side by side.

With reference to FIG. 1 and FIG. 2, FIG. 1 and FIG. 2 show that the first swing leg group 10 includes two first swing legs (outer legs) 11, and the second swing leg group 20 includes two second swing legs (inner legs) 21. The two first swing legs 11 are symmetrically distributed along a central axis of the mobile robot, and the two second swing legs 21 are symmetrically distributed along the central axis of the mobile robot. A distance between the first swing legs 11 and the central axis is greater than a distance between the second swing legs 21 and the central axis.

In a traveling process of the mobile robot, the first swing leg group 10 and the second swing leg group 20 support traveling in a cross gait, that is, the first swing leg group 10 and the second swing leg group 20 alternately travel as front and back leg groups, respectively. In an exemplary traveling process, the second swing leg group 20 is swung to a first landing point by using the first swing leg group 10 as a support leg, and subsequently, the first swing leg group 10 is swung to a second landing point by using the second swing leg group 20 as a support leg.

In some embodiments, in an initial posture, the plurality of first swing legs 11 are in contact with the ground as front legs, and the plurality of second swing legs 21 are in contact with the ground as rear legs. In this case, a projection of a center of gravity of the robot is located within a geometric figure formed by contact points between the front and rear legs and the ground. The plurality of first swing legs 11 are used as support legs, the plurality of second swing legs 21 are swung to the first landing point, and meanwhile, the center of gravity of the robot is controlled to move forward. The center of gravity of the robot is controlled to be located within the geometric figure formed by the contact points between the front and back legs and the ground again when the plurality of second swing legs 21 swing to the first landing point. The plurality of second swing legs 21 are used as support legs, the plurality of first swing legs 11 are swung to the first landing point, and meanwhile, the center of gravity of the robot is controlled to move forward. The center of gravity of the robot is controlled to be located within the geometric figure formed by the contact points between the front and back legs and the ground again when the plurality of second swing legs 21 swing to the second landing point.

The swing legs are controlled to telescope when the swing legs of the robot swing. In the present application, the telescoping of a swing leg includes retracting and extending of the swing leg. Schematically, the swing legs are controlled to retract if the centers of gravity of the swing legs are located behind the center of gravity of the mobile robot. The swing legs are controlled to extend if the centers of gravity of the swing legs are located in front of the center of gravity of the mobile robot.

According to the foregoing mobile robot, a first swing leg group and a second swing leg group are arranged, the first swing leg group includes a plurality of first swing legs, the second swing leg group includes a plurality of second swing legs, at least two of the plurality of first swing legs are respectively located at two sides of a central axis of the mobile robot, at least two of the plurality of second swing legs are respectively located at two sides of the central axis of the mobile robot, and the plurality of first swing legs and the plurality of second swing legs are arranged in a side-by-side manner, so that static stability of the mobile robot in a standing posture can be achieved, and a location of the center of gravity of the mobile robot does not need to be dynamically adjusted. In addition, the foregoing mobile robot supports traveling in a cross gait. In a traveling process, the mobile robot does not need to consider a problem about balance in a rolling direction, and the rolling direction is a direction perpendicular to the traveling direction.

In some embodiments, the plurality of first swing legs 11 are rotatably connected to a first swing rotation shaft, and the first swing rotation shaft is perpendicular to a traveling direction of the mobile robot. In embodiments, the first swing rotation shaft is located at a position such as a hip, a waist, or a head top of the mobile robot. In some embodiments, the plurality of second swing legs 21 are rotatably connected to a second swing rotation shaft, and the second swing rotation shaft is perpendicular to a traveling direction of the mobile robot. In embodiments, the second swing rotation shaft is located at a position such as a hip, a waist, or a head top of the mobile robot.

In some embodiments, the first swing rotation shaft is located at a hip of the mobile robot. With reference to FIG. 1, in this case, the first swing rotation shaft is a first hip rotation shaft 1, and the first hip rotation shaft 1 extends horizontally when the mobile robot stands on a horizontal base plane. The plurality of first swing legs 11 are rotatably connected to the first hip rotation shaft 1, and any two of the plurality of first swing legs 11 are parallel.

In some embodiments, the second swing rotation shaft is located at a hip of the mobile robot. With reference to FIG. 1, in this case, the second swing rotation shaft is a second hip rotation shaft 2, and the second hip rotation shaft 2 extends horizontally when the mobile robot stands on a horizontal base plane. The plurality of second swing legs 21 are rotatably connected to the second hip rotation shaft 2, and any two of the plurality of second swing legs 21 are parallel.

In embodiments, the first hip rotation shaft 1 and the second hip rotation shaft 2 are coaxial; and/or, the first hip rotation shaft 1 and the second hip rotation shaft 2 are located on the same plane. FIG. 1 and FIG. 2 show a case in which the first hip rotation shaft 1 and the second hip rotation shaft 2 are coaxial and are located on the same plane.

In some embodiments, the mobile robot further includes a first rotation rotating motor and a second rotating motor. The first rotating motor is configured to drive the plurality of first swing legs 11 in the first swing leg group 10 to interactively rotate around the first hip rotation shaft 1. The second rotating motor is configured to drive the plurality of second swing legs 21 in the second swing leg group 20 to interactively rotate around the second hip rotation shaft 2.

In some embodiments, the mobile robot further includes a third rotating motor corresponding to the first swing leg 11 and a fourth rotating motor corresponding to the second swing leg 21. The third rotating motor is configured to drive the first swing leg 11 to rotate around the first hip rotation shaft 1. The fourth rotating motor is configured to drive the second swing leg 21 to rotate around the second hip rotation shaft 2. In embodiments, the plurality of third rotating motors respectively corresponding to the plurality of first swing legs 11 support controlling the plurality of first swing legs 11 to interactively or independently rotate. In embodiments, the plurality of fourth rotating motors respectively corresponding to the plurality of second swing legs 21 support controlling the plurality of second swing legs 21 to interactively or independently rotate.

With reference to FIG. 1 and FIG. 2, the first swing leg 11 includes a first mechanical thigh 111 and a first mechanical calf 112, and the first mechanical thigh 111 is connected to the first mechanical calf 112 in a sleeving manner. In embodiments, the first mechanical thigh 111 is nested inside the first mechanical calf 112 in a sleeving state, and the first mechanical thigh 111 is telescoped in the sleeving direction during telescoping. In embodiments, the first mechanical calf 112 is nested inside the first mechanical thigh 111 in a sleeving state, and a first mechanical calf 112 is telescoped in the sleeving direction during telescoping (a case shown in FIG. 1 and FIG. 2). In embodiments, the first mechanical thigh 111 and the first mechanical calf 112 are nested inside middleware in a sleeving state, and the first mechanical thigh 111 and the first mechanical calf 112 are telescoped in a sleeving direction during telescoping.

The second swing leg 21 includes a second mechanical thigh 211 and a second mechanical calf 212. The second mechanical thigh 211 is connected to the second mechanical calf 212 in a sleeving manner. In embodiments, the second mechanical thigh 211 is nested inside the second mechanical calf 212 in a sleeving state, and the second mechanical thigh 211 is telescoped in a sleeving direction during telescoping. In embodiments, the second mechanical calf 212 is nested inside the second mechanical thigh 211 in a sleeving state, and the second mechanical calf 212 is telescoped in a sleeving direction during telescoping (a case shown in FIG. 1 and FIG. 2). In embodiments, the second mechanical thigh 211 and the second mechanical calf 212 are nested inside middleware in a sleeving state, and the second mechanical thigh 211 and the second mechanical calf 212 are telescoped in a sleeving direction during telescoping.

In some embodiments, the mobile robot further includes a first telescopic motor corresponding to the first swing leg 11, and a second telescopic motor corresponding to the second swing leg 21. The first telescopic motor is configured to drive the first swing leg 11 to telescope in a sleeving direction. The second telescopic motor is configured to drive the second swing leg 21 to telescope in the sleeving direction. In embodiments, the first telescopic motor is a first linear motor. In embodiments, the first telescopic motor is a motor designed to implement linear transmission by using a lead screw nut. In embodiments, the second telescopic motor is a second linear motor. In embodiments, the second telescopic motor is a motor designed to implement linear transmission by using a lead screw nut.

In some embodiments, a plurality of first telescopic motors respectively corresponding to the plurality of first swing legs 11 support controlling the plurality of first swing legs 11 to interactively telescope or independently telescope. In embodiments, a plurality of second telescopic motors respectively corresponding to the plurality of second swing legs 21 support controlling the plurality of second swing legs 21 to interactively telescope or independently telescope.

In some embodiments, the first swing leg 11 includes a first mechanical thigh 111 and a first mechanical calf 112, and the first mechanical thigh 111 is rotatably connected to the first mechanical calf 112 through a first knee joint rotation shaft. The first knee joint rotation shaft supports increasing or decreasing an included angle between the first mechanical thigh 111 and the first mechanical calf 112. The second swing leg 21 includes a second mechanical thigh 211 and a second mechanical calf 212, and the second mechanical thigh 211 is rotatably connected to the second mechanical calf 212 through a second knee joint rotation shaft. The second knee joint rotation shaft supports increasing or decreasing an included angle between the second mechanical thigh 211 and the second mechanical calf 212.

In some embodiments, the first swing leg group 10 includes a plurality of first swing legs 11, and the first swing leg 11 includes a first leg assembly and a first wheel 113 located at an end of the first leg assembly. The second swing leg group 20 includes a plurality of second swing legs 21, and the second swing leg 21 includes a second leg assembly and a second wheel 213 located at an end of the second leg assembly. In embodiments, the first wheel 113 is a wheel having a multi-directional degree of freedom, and the first wheel 113 supports rotation in any direction. In embodiments, the second wheel 213 is a wheel having a multi-directional degree of freedom, and the second wheel 213 supports rotation in any direction. With reference to FIG. 1 and FIG. 2, the first leg assembly includes a first mechanical thigh 111 and a first mechanical calf 112, and the second leg assembly includes a second mechanical thigh 211 and a second mechanical calf 212.

In some embodiments, the mobile robot further includes a first driving motor corresponding to the first wheel 113, and a second driving motor corresponding to the second wheel 213. The first driving motor is configured to drive the first wheel 113 to rotate. The second driving motor is configured to drive the second wheel 213 to rotate.

In some embodiments, a plurality of first driving motors respectively corresponding to the plurality of first swing legs 11 support controlling the plurality of first wheels 113 to perform interactively rotate or independently rotate. In embodiments, a plurality of second driving motors respectively corresponding to the plurality of second swing legs 21 support controlling the plurality of second wheels 213 to perform interactively rotate or independently rotate.

In some embodiments, the mobile robot further includes a waist structure 30 and a torso structure 40. The waist structure 30 is configured to connect the leg structure and the torso structure 40. The leg structure includes a first swing leg group 10 and a second swing leg group 20.

In some embodiments, the waist structure 30 includes a pitch rotation shaft 3. The pitch rotation shaft 3 is parallel to a rotation shaft of the first swing leg group 10, and/or the pitch rotation shaft 3 is parallel to a rotation shaft of the second swing leg group 20. Schematically, with reference to FIG. 1 and FIG. 2, the pitch rotation shaft 3 is parallel to the first hip rotation shaft 1 (to the second hip rotation shaft 2). The pitch rotation shaft 3 is rotatably connected to the torso structure 40, and the pitch rotation shaft 3 is configured to support the torso structure 40 to perform a pitching operation.

In some embodiments, the waist structure 30 includes a side swing rotation shaft 4. The side swing rotation shaft 4 is perpendicular to a rotation shaft of the first swing leg group 10, and/or the side swing rotation shaft 4 is perpendicular to a rotation shaft of the second swing leg group 20. With reference to FIG. 1 and FIG. 2, the side swing rotation shaft 4 is perpendicular to the first hip rotation shaft 1 (to the second hip rotation shaft 2). The side swing rotation shaft 4 is rotatably connected to the torso structure 40, and the side swing rotation shaft 4 is configured to support the torso structure 40 to perform a side swing operation.

In some embodiments, the waist structure 30 includes a pitch rotation shaft 3 and a side swing rotation shaft 4. The pitch rotation shaft 3 is parallel to a rotation shaft of the first swing leg group 10, and/or the pitch rotation shaft 3 is parallel to a rotation shaft of the second swing leg group 20. With reference to FIG. 1 and FIG. 2, the pitch rotation shaft 3 is parallel to the first hip rotation shaft 1 (to the second hip rotation shaft 2). The pitching rotation shaft 3 is configured to support the torso structure 40 to perform a pitching operation. The side swing rotation shaft 4 is perpendicular to the pitch rotation shaft 3. A first end 41 of the side swing rotation shaft 4 is connected to a center of the pitch rotation shaft 3, a second end 42 of the side swing rotation shaft 4 is connected to the torso structure 40, and the side swing rotation shaft 4 is configured to support the torso structure 40 to perform a side swing operation.

In some embodiments, the mobile robot further has at least one operating arm 50. With reference to FIG. 1 and FIG. 2, FIG. 1 and FIG. 2 show that the mobile robot has two operating arms 50, and the two operating arms 50 are symmetrically distributed along a central axis of the robot.

In embodiments, the operating arm 50 is connected to a shoulder rotation shaft 5 of the mobile robot. The shoulder rotation shaft 5 is configured to support the operating arm 50 to have a multi-directional rotation degree of freedom. In embodiments, the shoulder rotation shaft 5 supports the operating arm 50 to rotate within a rotation angle range allowed by a structure of the robot. In some embodiments, the mobile robot further includes a shoulder driving motor corresponding to the shoulder rotation shaft 5. The shoulder driving motor is configured to drive the operating arm 50 to rotate. In some embodiments, a plurality of shoulder driving motors respectively corresponding to a plurality of shoulder rotation shafts 5 support controlling the plurality of operating arms 50 to interactively rotate or independently rotate.

In embodiments, the operating arm 50 includes a mechanical upper arm 51 and a mechanical lower arm 52. The mechanical upper arm 51 is connected to the mechanical lower arm 52 through an elbow joint rotation shaft 6. The elbow joint rotation shaft 6 is configured to support the mechanical lower arm 52 to have a multi-directional rotation degree of freedom. In embodiments, the elbow joint rotation shaft 6 supports the mechanical lower arm 52 to rotate within a rotation angle range allowed by a structure of the robot. In some embodiments, the mobile robot further includes an elbow joint driving motor corresponding to the elbow joint rotation shaft 6. The elbow joint driving motor is configured to drive the mechanical lower arm 52 to rotate. In some embodiments, a plurality of elbow joint driving motors respectively corresponding to the plurality of elbow joint rotation shafts 6 support controlling the plurality of mechanical lower arms 52 to interactively rotate or independently rotate.

In some embodiments, a claw is connected to an end of the mechanical lower arm 52. In some embodiments, the mobile robot further has a head 60, and the head 60 is located above the torso structure 40.

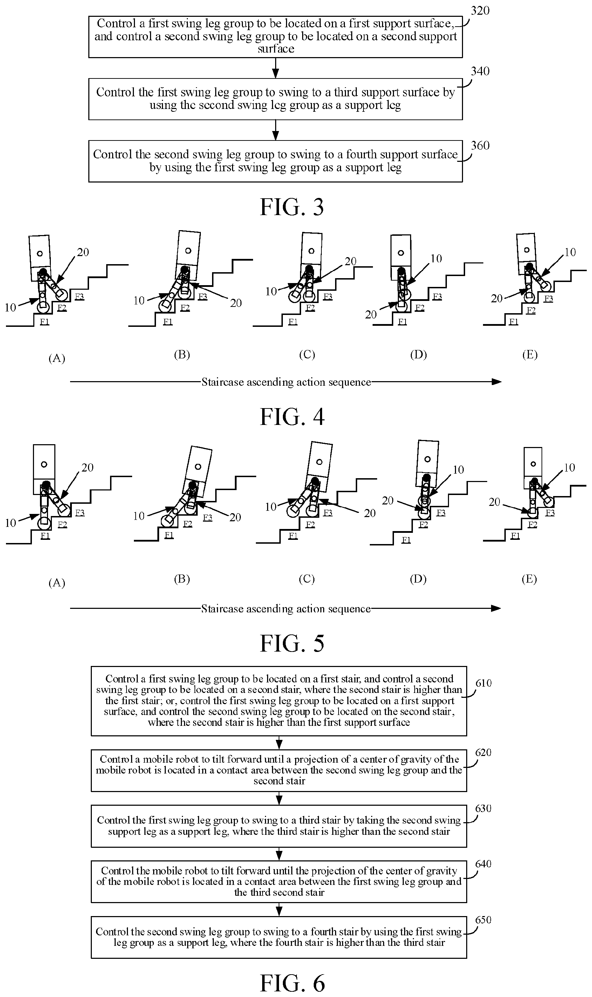

FIG. 3 shows a flowchart of a method for controlling a mobile robot according to an exemplary embodiment of this application. An example in which the method is performed by a controller for a mobile robot shown in FIG. 1 or FIG. 2 is configured for description. The controller of the mobile robot is located in a body or outside the mobile robot. The method includes the following operations.

Operation 320: Control a first swing leg group to be located on a first support surface, and control a second swing leg group to be located on a second support surface.

In some of the embodiments of the present application, each of the support surfaces in the present application may be a stair, which is not limited in the application. FIG. 3 shows a flowchart of ascending or descending method for a mobile robot. In some embodiments, the mobile robot includes a first swing leg group and a second swing leg group, the first swing leg group includes a plurality of first swing legs and/or the second swing leg group includes a plurality of second swing legs, the first swing leg group and the second swing leg group are arranged in a side-by-side manner, and a rotation shaft of the first swing leg group and a rotation shaft of the second swing leg group are located in the same plane. At least one of the first swing leg group and the second swing leg group includes a plurality of swing legs. In embodiments, the first swing leg group includes a plurality of first swing legs, and the second swing leg group includes one second swing leg. Or, the first swing leg group includes one first swing leg, and the second swing leg group includes a plurality of second swing legs. Or, the first swing leg group includes a plurality of first swing legs, and the second swing leg group includes a plurality of second swing legs.

In some embodiments, the first swing leg group includes a plurality of first swing legs, the second swing leg group includes a plurality of second swing legs, the plurality of first swing legs include at least two first swing legs respectively located at two sides of a central axis of the mobile robot, and the plurality of second swing legs includes at least two second swing legs respectively located at two sides of the central axis of the mobile robot, so that stability in a rolling direction is maintained when the two swing leg groups of the mobile robot ascend or descend alternately, a problem about balance in the rolling direction does not need to be considered, and the rolling direction is a direction perpendicular to a traveling direction.

In some embodiments, FIG. 3 shows a method for controlling ascending of a robot. The method in FIG. 3 shows a complete ascending cycle of a mobile robot. In an initial state of the ascending cycle, the first swing leg group is located on a first support surface, for example, a first stair, the second swing leg group is located on a second support surface, for example, a second stair, and the second support surface is higher than the first support surface. The first support surface may be a base surface or an initial stair on which the robot is located before the robot starts to move, for example ascend or descend a staircase.

In the ascending cycle shown in FIG. 3, an initial support surface, for example, an initial stair, on which the first swing leg group is located is lower than an initial support surface on which the second swing leg group is located. Similarly, a similar ascending cycle in which the initial support surface on which the second swing leg group is located is lower than the support surface stair on which the first swing leg group is located may be obtained.

In some embodiments, FIG. 3 shows a method for controlling descending of a robot. The method in FIG. 3 shows a complete descending cycle of a mobile robot. In an initial state of the descending cycle, the first swing leg group is located on the first support surface, for example, a first stair, the second swing leg group is located on the second support surface, for example, a second stair, and the second support surface is lower than the first support surface. In some embodiments, the first support surface may be a base surface on which the robot is located before the robot starts to descend.

In the descending cycle shown in FIG. 3, an initial support surface, for example, an initial stair, on which the first swing leg group is located is higher than an initial support surface on which the second swing leg group is located. Similarly, a similar descending cycle in which the initial support surface on which the second swing leg group is located is higher than the initial support surface on which the first swing leg group is located may be obtained.

**Operation 340:** Control the first swing leg group to swing to a third support surface by using the second swing leg group as a support leg.

In some embodiments, FIG. 3 shows a method for controlling ascending of a robot. The second swing leg group is in contact with the second support surface, and the second swing leg group is supported by the second support surface. The mobile robot is controlled to swing the first swing leg group to swing the first swing leg group from the first support surface to the third support surface, and the third support surface is a higher than the second support surface.

In some embodiments, FIG. 3 shows a method for controlling descending of a robot. The second swing leg group is in contact with the second support surface, and the second swing leg group is supported by the second support surface. The mobile robot is controlled to swing the first swing leg group to swing the first swing leg group from the first support surface to the third support surface, and the third support surface is lower than the second support surface.

In some embodiments, in a process of swinging the first swing leg group, the first swing leg group not only needs to be controlled to perform a swinging action, but also needs to be controlled to perform a telescoping action. That is, operation S340 includes: controlling the first swing leg group to telescope and swing to the third support surface by using the second swing leg group as the support leg.

Schematically, the first swing leg group is controlled to shorten and swing by using the second swing leg group as a support leg until an extension direction of the first swing leg group is parallel to a direction of gravity. Then, the first swing leg group is controlled to extend and swing until the first swing leg group is located on the third support surface.

In some embodiments, the first swing leg of the first swing leg group includes a first mechanical thigh and a first mechanical calf. The first mechanical thigh is connected to the first mechanical calf in a sleeving manner. The sleeving manner supports telescoping the first mechanical thigh in a sleeving direction, or telescoping the first mechanical calf in a sleeving direction, or telescoping the first mechanical thigh and the first mechanical calf in a sleeving direction. In a process of swinging the first swing leg group, the first swing leg group is controlled to shorten and swing by using the second swing leg group as a support leg until an extension direction of the first swing leg group is parallel to a direction of gravity. Then, the first swing leg group is controlled to extend and swing until the first swing leg group is located on the third support surface.

FIG. 4 shows an ascending action sequence. The ascending manner shown in FIG. 4 is quasi-static ascending. Part (A) in FIG. 4 shows that a first swing leg group 10 is located on a first support surface F1, and a second swing leg group 20 is located on a second support surface F2. With reference to part (A) in FIG. 4 and part (C) in FIG. 4, the first swing leg group 10 is shortened. Part (E) in FIG. 4 shows that the first swing leg group 10 is located on a third support surface F3, and the second swing leg group 20 is located on the second support surface F2. With reference to part (C) in FIG. 4 and part (E) in FIG. 4, the first swing leg group 10 is extended.

FIG. 5 shows another ascending action sequence. The ascending manner shown in FIG. 5 is static ascending. Part (A) in FIG. 5 shows that a first swing leg group 10 is located on a first support surface F1, and a second swing leg group 20 is located on a second support surface F2. With reference to part (A) in FIG. 5 and part (D) in FIG. 5, the first swing leg group 10 is shortened. Part (E) in FIG. 5 shows that the first swing leg group 10 is located on a third support surface F3, and the second swing leg group 20 is located on the second support surface F2. With reference to part (D) in FIG. 5 and part (E) in FIG. 5, the first swing leg group 10 is extended.

In another embodiment, the first swing leg of the first swing leg group includes a first mechanical thigh and a first mechanical calf, the first mechanical thigh is connected to the first mechanical calf through a first knee joint rotation shaft. The first knee joint rotation shaft supports increasing or decreasing an included angle between the first mechanical thigh and the first mechanical calf. In a process of swinging the first swing leg group, the first swing leg group is controlled to bend and swing by using the second swing leg group as a support leg until an extension direction of the first swing leg group is parallel to a direction of gravity. Then, the first swing leg group is controlled to straighten and swing until the first swing leg group is located on the third support surface.

**Operation 360:** Control the second swing leg group to swing to a fourth support surface by using the first swing leg group as a support leg.

In some embodiments, FIG. 3 shows a method for controlling ascending of a robot. The foregoing operation 340 describes a process of swinging the first swing leg group by using the second swing leg group as a support leg in an ascending action process. Operation 360 is similarly implemented as a process of swinging the second swing leg group by using the first swing leg group as a support leg in the ascending action process. In a swinging process in operation 360, the first swing leg group is in contact with the third support surface, the first swing leg group is supported by the third support surface, and the mobile robot is controlled to swing the second swing leg group to swing the second swing leg group from the second support surface to the fourth support surface, and the fourth support surface is higher than the third support surface.

In some embodiments, FIG. 3 shows a method for controlling descending of a robot. The foregoing operation 340 describes a process of swinging the first swing leg group by using the second swing leg group as a support leg in a descending action process. Step 360 is similarly implemented as a process of swinging the second swing leg group by using the first swing leg group as a support leg in a descending action process. In a swinging process in operation 360, the first swing leg group is in contact with the third support surface, the first swing leg group is supported by the third support surface, and the mobile robot is controlled to swing the second swing leg group to swing the second swing leg group from the second support surface to the fourth support surface, and the fourth support surface is lower than the third support surface.

In some embodiments, in a process of swinging the second swing leg group, the second swing leg group not only needs to be controlled to perform a swinging action, but also needs to be controlled to perform a telescoping action. That is, operation S360 includes: controlling the second swing leg group to telescope and swing to the third support surface by using the first swing leg group as the support leg.

Schematically, the second swing leg group is controlled to shorten and swing by using the first swing leg group as a support leg until an extension direction of the second swing leg group is parallel to a direction of gravity. The second swing leg group is controlled extend and swing until the second swing leg group is located on the fourth support surface.

In some embodiments, the second swing leg of the second swing leg group includes a second mechanical thigh and a second mechanical calf. The second mechanical thigh is connected to the second mechanical calf in a sleeving manner. The sleeving manner supports telescoping the second mechanical thigh in a sleeving direction, or telescoping the second mechanical calf in a sleeving direction, or telescoping the second mechanical thigh and the second mechanical calf in a sleeving direction. In a process of swinging the second swing leg group, the second swing leg group is controlled to shorten and swing by using the second swing leg group as a support leg until an extension direction of the second swing leg group is parallel to a direction of gravity. Then, the second swing leg group is controlled to extend and swing until the second swing leg group is located on the fourth support surface.

In another embodiment, the second swing leg of the second swing leg group includes a second mechanical thigh and a second mechanical calf, the second mechanical thigh is connected to the second mechanical calf through a second knee joint rotation shaft, and the second knee joint rotation shaft supports increasing or decreasing an included angle between the second mechanical thigh and the second mechanical calf. In a process of swinging the second swing leg group, the second swing leg group is controlled to bend and swing by using the first swing leg group as a support leg until an extension direction of the second swing leg group is parallel to a direction of gravity. Then, the second swing leg group is controlled to straighten and swing until the second swing leg group is located on the fourth support surface.

In conclusion, two swing leg groups (at least one of the two swing leg groups includes a plurality of swing legs) ascend/descend alternatively, and a solution for a mobile robot to ascend/descend is provided. In this solution, safety of the mobile robot is relatively high, difficulty in implementing ascending/descending is relatively low, the robot has a relatively large stability margin, and a real machine implementation risk can be reduced.

In addition, when the plurality of first swing legs of the first swing leg group include at least two first swing legs respectively located at two sides of a central axis of the mobile robot, and the plurality of second swing legs of the second swing leg group include at least two second swing legs respectively located at two sides of the central axis of the mobile robot, balance of the mobile robot in a rolling direction when ascending or descending is ensured, the balance of the rolling direction does not need to be controlled by an additional algorithm, and the rolling direction is a direction perpendicular to a traveling direction of the mobile robot.

In addition, in a process in which the two swing leg groups alternately ascend or descend, legs are further telescoped, thereby providing an ascending and descending solution for a robot having a leg telescoping function.

In some embodiments of the present application, the above-described ascending manner of the mobile robot may refer to a manner for the robot to ascend a staircase, hence a staircase ascending manner; and the above-described descending manner of the mobile robot may refer to a manner for the robot to descend a staircase, hence a staircase descending manner. Based on an embodiment shown in FIG. 3, only the staircase ascending manner of the mobile robot is considered. The staircase ascending manner of the mobile robot may be further divided into a quasi-static staircase ascending manner and a static staircase ascending manner. The staircase ascending action sequence shown in FIG. 4 is a quasi-static staircase ascending action sequence, and the staircase ascending action sequence shown in FIG. 5 is a static staircase ascending action sequence. In some embodiments of the present application, accordingly, each of the first to the fourth support surfaces is a stair in the staircase; for example, in some embodiments, the first support surface is a first stair in the staircase, the second support surface is a second stair in the staircase, the third support surface is a third stair in the staircase, and the fourth support surface is a fourth stair in the staircase. However, the first to the fourth support surfaces are not limited to the first to the fourth stairs, but may take various other forms, such as slopes and so on.

The quasi-static staircase ascending refers to that at each moment in a staircase ascending process, a center of gravity of the entire mobile robot is in a ground support area, or the center of gravity of the entire mobile robot deviates from a support area to a sufficiently small extent. In this case, an overall posture of the robot at each moment can be maintained in a balanced state, or can be restored to a balanced state at any time by a particular method.

Static staircase ascending refers to that at each moment in a staircase ascending process, a center of gravity of the entire mobile robot is in a ground support area, and an overall posture of the robot at each moment in a static state can be maintained in a balanced state without any other condition.

Quasi-static staircase ascending: Based on an embodiment shown in FIG. 3, FIG. 6 shows a flowchart of a quasi-static staircase ascending method for a mobile robot. An example in which the method is performed by a controller for a mobile robot shown in FIG. 1 or FIG. 2 is configured for description. The controller of the mobile robot is located in a body or outside the mobile robot. The method shown in FIG. 6 includes the following operations.

Operation 610: Control a first swing leg group to be located on a first stair, and control a second swing leg group to be located on a second stair, where the second stair is higher than the first stair; or, control the first swing leg group to be located on a base surface on which the robot is located before the robot starts to move, and control the second swing leg group to be located on the second stair, where the second stair is higher than the base surface.

In a quasi-static staircase ascending process shown in FIG. 6, the first stair and the second stair are adjacent stairs, and the second swing leg group is not in contact with a side wall of a third stair when being located on the second stair. That is, in a quasi-static staircase ascending process, the second swing leg is not supported by the third stair, the second swing leg group does not receive a support force from the third stair, and the second swing leg group only receives a support force from the second stair.

With reference to FIG. 4, part (A) in FIG. 4 shows that the first swing leg group 10 is located on the first stair F1, the second swing leg group 20 is located on the second stair F2, and the second stair F2 is higher than the first stair F1. In this case, the second swing leg group 20 is not in contact with the third stair F3.

**Operation 620:** Control a mobile robot to tilt forward until a projection of a center of gravity of the mobile robot is located in a contact area between the second swing leg group and the second stair.

With reference to FIG. 4, after the mobile robot tilts forward, part (B) in FIG. 4 shows that the first swing leg group 10 is located on the first stair F1, the second swing leg group 20 is located on the second stair F2, and the projection of the center of gravity of the mobile robot is located in a contact area between the second swing leg group 20 and the second stair F2.

In FIG. 4, an unfilled circle is configured for representing the center of gravity of each part of the mobile robot, and a black-filled circle is configured for representing an overall center of gravity of the mobile robot. In FIG. 4, unfilled circles are configured for separately representing centers of gravity of an upper body, a thigh, and a calf of the mobile robot. The overall center of gravity of the mobile robot may be represented by using the following formula:

$$c = \frac{\sum m_i c_i}{\sum m_i}$$

where c is the overall center of gravity of the mobile robot, and $m_i$ is a mass of each part of the mobile robot, and $c_i$ is a center of gravity of each part of the mobile robot, and i is a positive integer. Part (B) in FIG. 4 shows that in this case, the projection of the center of gravity of the mobile robot is located in the contact area between the second swing leg group 20 and the second stair F2.

In some embodiments, the second swing leg group includes a plurality of second swing legs, the second swing leg includes a second leg assembly and a second wheel, each second wheel is in point contact with the second stair, and the plurality of second wheels are in line contact with the second stair. Therefore, the contact area between the second swing leg group and the second stair is a contact line.

In some embodiments, in a process of controlling the mobile robot to tilt forward, the projection of the center of gravity of the mobile robot needs to be always kept falling within a geometric figure bordered by a contact point between the second swing leg group and the second stair and a contact point between the first swing leg group and the first stair. Since the geometric figure has a large range, additional control does not need to be performed as long as ensuring that a forward tilting speed of the mobile robot is relatively low. However, when the projection of the center of gravity of the mobile robot changes, that is, there is an acceleration when the mobile robot starts to tilt forward. In this case, the mobile robot may be unstable. Therefore, a control method still needs to be set to ensure stability of the mobile robot. For details, refer to related descriptions of a first control method below.

**Operation 630:** Control the first swing leg group to swing to a third stair by taking the second swing support leg as a support leg, where the third stair is higher than the second stair.

In a quasi-static staircase ascending process shown in FIG. 6, the second stair and the third stair are adjacent stairs. With reference to FIG. 4, parts (C), (D), and (E) in FIG. 4 show a process of controlling first swing leg group 10 to swing to the third stair F3 by using the second swing leg group 20 as a support leg.

After the first swing leg group leaves the first stair, the center of gravity of the mobile robot needs to be controlled to be always kept in a contact area between the second swing leg group and the second stair. The second swing leg group includes a plurality of second swing legs, the second swing leg includes a second leg assembly and a second wheel, there is point contact between each second wheel and the second stair, and the plurality of second wheel are in line contact with the second stair. Therefore, the contact area between the second swing leg group and the second stair is a contact line.

In some embodiments, in a process of controlling the first swing leg group to swing to the third stair, the mobile robot is controlled to tilt forward until the first swing leg group is parallel to a direction of gravity, and then the mobile robot is controlled to tilt backward until the first swing leg group swings to the third stair. With reference to FIG. 4, part (C) in FIG. 4 shows that the mobile robot is in a forward tilt state. Part (E) in FIG. 4 shows that the mobile robot is in a backward tilt state. For details, refer to the related descriptions of a second control method below.

**Operation 640:** Control the mobile robot to tilt forward until the projection of the center of gravity of the mobile robot is located in a contact area between the first swing leg group and the third second stair.

The foregoing operation 620 and operation 630 describe related operations of swinging the first swing leg group by using the second swing leg group as a support leg in the staircase ascending action process. Operation 640 and operation 650 are similarly implemented as related operations of swinging the second swing leg group by using the first swing leg group as a support leg in the staircase ascending action process.

FIG. 4 only shows a half cycle of a staircase ascending action. Similarly, a similar lower half cycle may be obtained. In a second half cycle, the second swing leg group is swung. For operation 640, refer to the description of operation 620.

In some embodiments, the first swing leg group includes a plurality of first swing legs, the first swing leg includes a first leg assembly and a first wheel, each first wheel is in point contact with the third stair, and the plurality of first wheels are in line contact with the third stair. Therefore, a contact area between the first swing leg group and the third stair is a contact line.

In some embodiments, in a process of controlling the mobile robot to tilt forward, a projection of a center of gravity of the mobile robot needs to be always kept falling within a geometric figure bordered by a contact point between the second swing leg group and the second stair and a contact point between the first swing leg group and the third stair. Since the geometric figure has a large range, additional control does not need to be performed as long as ensuring that a forward tilting speed of the mobile robot is relatively low. However, when the projection of the center of gravity of the mobile robot changes, that is, there is an acceleration when the mobile robot starts to tilt forward. In this case, the mobile robot may be unstable. Therefore, a control method still needs to be set to ensure stability of the mobile robot. For details, refer to related descriptions of a first control method below.

**Operation 650:** Control the second swing leg group to swing to a fourth stair by using the first swing leg group as a support leg, where the fourth stair is higher than the third stair.

In a quasi-static staircase ascending process shown in FIG. 6, the third stair and the fourth stair are adjacent stairs.

After the second swing leg group leaves the second stair, the center of gravity of the mobile robot needs to be controlled to be always kept in the contact area between the first swing leg group and the third stair. The first swing leg group includes a plurality of first swing legs, the first swing leg includes a first leg assembly and a first wheel, each first wheel is in point contact with the third stair, and the plurality of first wheels are in line contact with the third stair. Therefore, the contact area between the second swing leg group and the second stair is a contact line.

In some embodiments, in a process of controlling the second swing leg group to swing to the fourth stair, the mobile robot is controlled to tilt forward until the second swing leg group is parallel to a direction of gravity, and then the mobile robot is controlled to tilt backward until the second swing leg group swings to the fourth stair. For details, refer to the related descriptions of a second control method below.

Similarly, operation 650 may similarly refer to the descriptions of operation 630.

In conclusion, the foregoing solution provides a quasi-static staircase ascending solution. Before a swing leg ascends a staircase, the projection of the center of gravity of a robot is first moved to a contact area between the support leg and the stair, and a solution of migrating the center of gravity of the robot is provided, so that the robot can continuously and stably ascend the staircase.

Based on an embodiment shown in FIG. 6, the quasi-static staircase ascending process further includes at least one of the following two control methods. A first control method is configured for ensuring stability in a process of migrating a center of gravity of a mobile robot when both a first swing leg group and a second swing leg group of the mobile robot are in contact with a stair. A second control method is configured for controlling the mobile robot to tilt forward when only one swing leg group of the mobile robot is in contact with the stair.

According to **the first control method,** an end of the first swing leg of the first swing leg group includes a first wheel, and an end of the second swing leg of the second swing leg group includes a second wheel. Based on an embodiment shown in FIG. 6, operation 620 may be replaced with the following operations. The mobile robot is configured to tilt forward, and at least one first wheel of the first swing leg group and at least one second wheel of the second swing leg group are driven to control a horizontal position and a vertical height of the mobile robot to remain unchanged until the projection of the center of gravity of the mobile robot is located in the contact area between the second swing leg group and the second stair.

In some embodiments, the at least one first wheel of the first swing leg group is controlled to control the first swing leg group be stationary horizontally and the second swing leg group be stationary vertically until a stair contact force of the first swing leg group is less than a stair contact force of the second swing leg group. The at least one second wheel of the second swing leg group is driven to control the second swing leg group be stationary horizontally and the first swing leg group be stationary vertically until the projection of the center of gravity of the mobile robot is located in the contact area between the second swing leg group and the second stair. The stair contact force refers to a support force received from a stair.

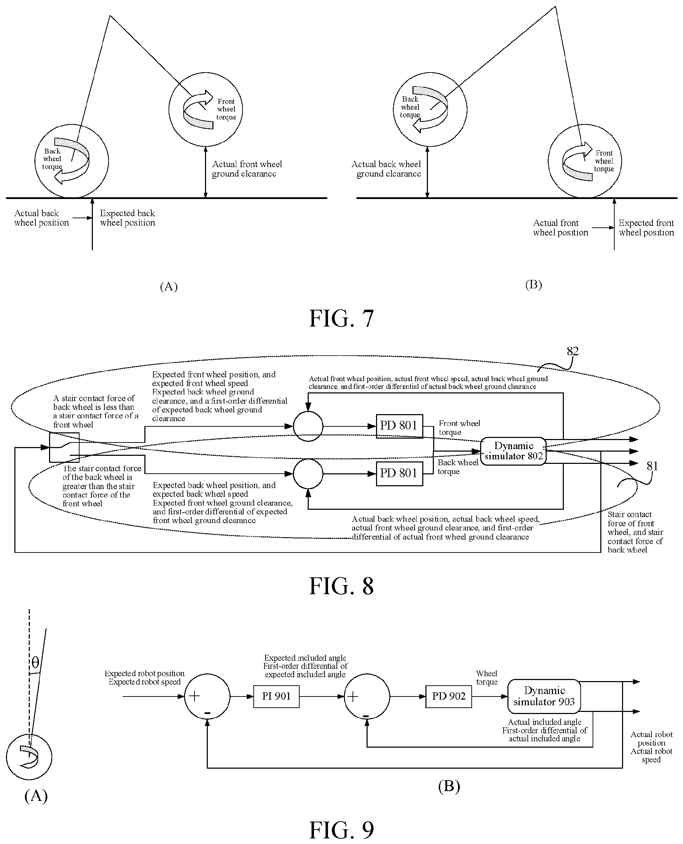

Schematically, with reference to FIG. 7, part (A) in FIG. 7 shows a case in which the stair contact force of the first swing leg group is greater than the stair contact force of the second swing leg group, that is, a case in which the stair contact force of at least one first wheel is greater than the stair contact force of at least one second wheel. In this case, the first wheel is a back wheel (back), and the second wheel is a front wheel (front). That is, part (A) in FIG. 7 shows a case in which a stair contact force of the back wheel is greater than a stair contact force of the front wheel, and is represented as $f_{contact,b} > f_{contact,f}$.

FIG. 8 shows a first control branch 81. The first control branch 81 is a case in which the stair contact force of the back wheel is greater than the stair contact force of the front wheel. Under the first control branch 81, a deviation between an actual value and an expected value of each control amount is calculated according to an expected back wheel position $x_{b,ref}$, an expected back wheel speed $x_{b,ref}$, an expected front wheel ground clearance $z_{f,ref}$, a first-order differential $\dot{z}_{f,ref}$ of the expected front wheel ground clearance, an actual back wheel position $x_b$, an actual back wheel speed $\dot{x}_b$, an actual front wheel ground clearance $z_f$, and a first-order differential $\dot{z}_f$ of the expected front wheel ground clearance, and the deviation is sent to a PD controller 801. The PD controller 801 calculates a back wheel torque, and sends the back wheel torque to a dynamic simulator 802. The dynamic simulator 802 drives a back wheel of the mobile robot.

Schematically, with reference to FIG. 7, part (B) in FIG. 7 shows a case in which the stair contact force of the first swing leg group is less than the stair contact force of the second swing leg group, that is, a case in which the stair contact force of the at least one first wheel is less than the stair contact force of the at least one second wheel. In this case, the first wheel is a back wheel (back), and the second wheel is a front wheel (front). That is, part (B) in FIG. 7 shows a case in which the stair contact force of the back wheel is less than the stair contact force of the front wheel, and is represented as $f_{contact,b} < f_{contact,f}$.

FIG. 8 shows a first control branch 82. The first control branch 82 is a case in which the stair contact force of the back wheel is greater than the stair contact force of the front wheel. Under the first control branch 82, a deviation between an actual value and an expected value of each control amount is calculated according to an expected front wheel position $x_{f,ref}$, an expected front wheel speed $\dot{x}_{f,ref}$, an expected back wheel ground clearance $z_{b,ref}$, a first-order differential $\dot{z}_{b,ref}$ of the expected back wheel ground clearance, an actual front wheel position $x_f$, an actual front wheel speed $\dot{x}_f$, an actual back wheel ground clearance $z_b$, and a first-order differential $\dot{z}_b$ of the expected back wheel ground clearance, and the deviation is sent to a PD controller 801. The PD controller 801 calculates a front wheel torque, and sends the front wheel torque to a dynamic simulator 802. The dynamic simulator 802 drives a front wheel of the mobile robot.

Based on an embodiment shown in FIG. 6, operation 640 may be replaced with the following operations. The mobile robot is controlled to tilt forward, and at least one second wheel of the second swing leg group and at least one first wheel of the first swing leg group are driven to control a horizontal position and a vertical height of the mobile robot not to change until the projection of the center of gravity of the mobile robot is located on the contact area between the first swing leg group and the third stair.

In some embodiments, the at least one second wheel of the second swing leg group is driven to control the second swing leg group be stationary horizontally and the first swing leg group be stationary vertically until a stair contact force of the second swing leg group is less than a stair contact force of the first swing leg group; and the at least one first wheel of the first swing leg group is driven to control the first swing leg group be stationary horizontally and the second swing leg group be stationary vertically until the projection of the center of gravity of the mobile robot is located in the contact area between the first swing leg group and the third stair. The stair contact force refers to a support force received from a stair.

Schematically, with reference to FIG. 7, part (A) in FIG. 7 shows a case in which the stair contact force of the second swing leg group is greater than the stair contact force of the first swing leg group, that is, a case in which the stair contact force of the at least one first wheel is greater than the stair contact force of the at least one second wheel. In this case, the second wheel is a back wheel (back), and the first wheel is a front wheel (front). That is, part (A) in FIG. 7 shows a case in which the stair contact force of the back wheel is greater than the stair contact force of the front wheel, and is represented as $f_{contact,b} > I_{contact,f}$.

FIG. 8 shows a first control branch 81. The first control branch 81 is a case in which the stair contact force of the back wheel is greater than the stair contact force of the front wheel. Under the first control branch 81, a deviation between an actual value and an expected value of each control amount is calculated according to an expected back wheel position $x_{b,ref}$, an expected back wheel speed $\dot{x}_{b,ref}$, an expected front wheel ground clearance $z_{f,ref}$, a first-order differential $\dot{z}_{f,ref}$ of the expected front wheel ground clearance, an actual back wheel position $x_b$, an actual back wheel speed $\dot{x}_b$, an actual front wheel ground clearance $z_f$, and a first-order differential $\dot{z}_f$ of the expected front wheel ground clearance, and the deviation is sent to a PD controller 801. The PD controller 801 calculates a back wheel torque, and sends the back wheel torque to a dynamic simulator 802. The dynamic simulator 802 drives a back wheel of the mobile robot.

Schematically, with reference to FIG. 7, part (B) in FIG. 7 shows a case in which the stair contact force of the second swing leg group is greater than the stair contact force of the first swing leg group (that is, a case in which the stair contact force of the at least one second wheel is less than the stair contact force of the at least one first wheel). In this case, the second wheel is a back wheel (back), and the first wheel is a front wheel (front). That is, part (B) in FIG. 7 shows a case in which the stair contact force of the back wheel is less than the stair contact force of the front wheel, and is represented as $f_{contact,b} < f_{contact,f}$.

FIG. 8 shows a first control branch 82. The first control branch 82 is a case in which the stair contact force of the back wheel is greater than the stair contact force of the front wheel. Under the first control branch 82, a deviation between an actual value and an expected value of each control amount is calculated according to an expected front wheel position $x_{f,ref}$, an expected front wheel speed $\dot{x}_{f,ref}$, an expected back wheel ground clearance $z_{b,ref}$, a first-order differential $\dot{z}_{b,ref}$ of the expected back wheel ground clearance, an actual front wheel position $x_f$, an actual front wheel speed $\dot{x}_f$, an actual back wheel ground clearance $z_b$, and a first-order differential $\dot{z}_b$ of the expected back wheel ground clearance, and the deviation is sent to a PD controller 801. The PD controller 801 calculates a front wheel torque, and sends the front wheel torque to a dynamic simulator 802. The dynamic simulator 802 drives a front wheel of the mobile robot.

In conclusion, before the swing leg ascends a staircase, the projection of the center of gravity of the robot needs to be projected and moved to a contact area between the support legs and the stair. The foregoing solution provides a control method, so that the robot can be maintained stable in a process of migrating the center of gravity. In addition, the foregoing method is applicable to a robot with a wheel at a leg end, the wheel is in point contact with the stair surface, and a plurality of wheels are in line contact with the stair surface. The foregoing provides a solution in which a robot that is in line contact with the stair can be maintained stable in the process of migrating the center of gravity.

According to a second **control method,** based on an embodiment shown in FIG. 6, operation 630 further includes: controlling, in a process of controlling the first swing leg group to swing to the third stair, the mobile robot to tilt forward until the first swing leg group is parallel to a direction of gravity, and controlling the mobile robot to tilt backward until the first swing leg group swings to the third stair.

In some embodiments, an end of the first swing leg of the first swing leg group includes a first wheel, and an end of the second swing leg of the second swing leg group includes a second wheel. Operation 630 is an operation of controlling the first swing leg group to swing to a third stair by using the second swing leg group as a support leg. In a process of controlling the first swing leg group to swing to the third stair, the at least one second wheel of the second swing leg group is driven to control the mobile robot to tilt forward until the first swing leg group is parallel to a direction of gravity, and to control the mobile robot to tilt backward until the first swing leg group swings to the third stair.

With reference to FIG. 9, part (A) in FIG. 9 shows control amounts of a second wheel in a process of swinging the first swing leg group: an included angle $\theta$ (a tilt angle of the mobile robot), a first-order differential (not shown) of the included angle $\theta$, a robot position (not shown), and a robot speed (not shown). In a process of swinging the first swing leg group, the included angle $\theta$ is detected, and the included angle $\theta$ is used as the control amount to control the second wheel to be driven.

Part (B) in FIG. 9 shows a method for controlling an included angle $\theta$. An expected robot position $x_{robot,ref}$, an expected robot speed $\dot{x}_{robot,ref}$, an actual robot position $x_{robot}$, and an actual robot speed $\dot{x}_{robot}$ are obtained. Deviations between actual values and expected values of the two control amounts are calculated, and the deviations are sent to a PI controller 901. The PI controller 901 calculates an expected angle $\theta_{ref}$ and a first-order differential of an expected angle $\dot{\theta}_{ref}$. Deviations between actual values and expected values of the included angle $\theta$ and the first-order differential $\dot{\theta}$ of the included angle are calculated. The deviations are sent to a PD controller 902. The PD controller 902 calculates a torque $\tau$ of the second wheel, and sends the torque $\tau$ to a dynamic simulator 903. The dynamic simulator 903 drives the second wheel of the mobile robot.

Based on an embodiment shown in FIG. 6, operation 650 further includes: controlling, in a process of controlling the second swing leg group to swing to the fourth stair, the mobile robot to tilt forward until the second swing leg group is parallel to a direction of gravity, and controlling the mobile robot to tilt backward until the first swing leg group swings to the fourth stair.

In some embodiments, an end of the first swing leg includes a first wheel, and an end of the second swing leg includes a second wheel. Operation 650 is an operation of controlling the second swing leg group to swing to a fourth stair by using the first swing leg group as a support leg. In a process of controlling the second swing leg group to swing to the fourth stair, the at least one first wheel of the first swing leg group is driven to control the mobile robot to tilt forward until the second swing leg group is parallel to a direction of gravity, and to control the mobile robot to tilt backward until the second swing leg group swings to the fourth stair.

With reference to FIG. 9, part (A) in FIG. 9 shows control amounts of a first wheel in a process of swinging the second swing leg group: an included angle $\theta$ (a tilt angle of the mobile robot), a first-order differential (not shown) of the included angle $\theta$, a robot position (not shown), and a robot speed (not shown). In a process of swinging the second swing leg group, the included angle $\theta$ is detected, and the included angle $\theta$ is used as the control amount to control the first wheel to be driven.

Part (B) in FIG. 9 shows a method for controlling an included angle $\theta$. An expected robot position $x_{robot,ref}$, an expected robot speed $\dot{x}_{robot,ref}$, an actual robot position $x_{robot}$, and an actual robot speed $\dot{x}_{robot}$ are obtained. Deviations between actual values and expected values of the two control amounts are calculated, and the deviations are sent to a PI controller 901. The PI controller 901 calculates an expected angle $\theta_{ref}$ and a first-order differential of an expected angle $\dot{\theta}_{ref}$. Deviations between actual values and expected values of the included angle $\theta$ and the first-order differential $\dot{\theta}$ of the included angle are calculated. The deviations are sent to a PD controller 902. The PD controller calculates a torque $\tau$ of the first wheel, and sends the torque $\tau$ to a dynamic simulator 903. The dynamic simulator 903 drives the first wheel of the mobile robot.

In conclusion, the foregoing method provides a robot control method. In a process of controlling a swing leg of a robot to ascend a staircase, a tilt angle of a mobile robot is detected and controlled, so that the robot can be maintained stable in the process of ascending the staircase. The foregoing method is applicable to a robot with a wheel at a leg end, the wheel is in point contact with a stair surface, and a plurality of wheels are in line contact with the stair surface. The foregoing provides a method for quasi-static staircase ascending of a robot that is in line contact with the stair.

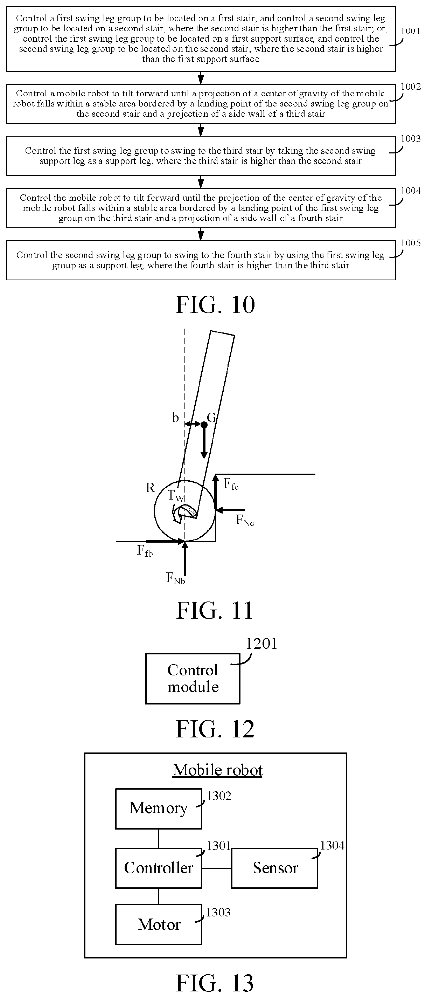

**Static staircase ascending,** FIG. 10 shows a flowchart of a static staircase ascending method for a mobile robot. An example in which the method is performed by a controller for a mobile robot shown in FIG. 1 or FIG. 2 is configured for description. The controller of the mobile robot is located in a body or outside the mobile robot. The method shown in FIG. 10 includes the following operations.

**Operation 1001:** Control a first swing leg group to be located on a first stair, and control a second swing leg group to be located on a second stair, where the second stair is higher than the first stair; or, control the first swing leg group to be located on a base surface on which the robot is located before the robot starts to move, and control the second swing leg group to be located on the second stair, where the second stair is higher than the base surface.

In a static staircase ascending process shown in FIG. 10, the first stair and the second stair are adjacent stairs, the second stair and the third stair are adjacent stairs, and the third stair and the fourth stair are adjacent stairs. The second swing leg group is in contact with a side wall of the third stair when being located on the second stair. That is, in a static staircase ascending process, the second swing leg is supported by the second stair and the third stair simultaneously. The second swing leg group simultaneously receives a support force from the second stair and the third stair.

With reference to FIG. 5, part (A) in FIG. 5 shows that the first swing leg group 10 is located on the first stair F1, the second swing leg group 20 is located on the second stair F2, and the second stair F2 is higher than the first stair F1. In this case, the second swing leg group 20 is in contact with a side wall of the third stair F3.

**Operation 1002:** Control the mobile robot to tilt forward until a projection of a center of gravity of the mobile robot falls within a stable area bordered by a landing point of the second swing leg group on the second stair and a projection of a side wall of a third stair.

With reference to FIG. 5, after the mobile robot tilts forward, part (B) in FIG. 5 shows that the first swing leg group 10 is located on a first stair F1, the second swing leg group 20 is located on a second stair F2, and the projection of the center of gravity of the mobile robot is located slightly in front of a contact area between the second swing leg group 20 and the second stair F2. The projection of the center of gravity of the mobile robot falls within a stable area formed by the second swing leg group 20 and the side wall of the third stair F3. The stable area refers to an area bordered by the landing point of the second swing leg group and the projection of the side wall of the third stair. The second swing leg includes a second leg assembly and a second wheel, and the stable area includes an area bordered by projections of centers of circles of the plurality of second wheel and the side wall of the third stair.

In FIG. 5, an unfilled circle is configured for representing the center of gravity of each part of the mobile robot, and a black-filled circle is configured for representing an overall center of gravity of the mobile robot. In FIG. 5, unfilled circles are configured for separately representing centers of gravity of an upper body, a thigh, and a calf of the mobile robot. The overall center of gravity of the mobile robot may be represented by using the following formula:

$$c = \frac{\sum m_i c_i}{\sum m_i}$$

where c is the overall center of gravity of the mobile robot, and $m_i$ is a mass of each part of the mobile robot, and $c_i$ is a center

of gravity of each part of the mobile robot, and i is a positive integer. Part (B) in FIG. 5 shows that in this case, the projection of the center of gravity of the mobile robot is located slightly in front of a contact area between the second swing leg group 20 and the second stair F2.

In some embodiments, the second swing leg group includes a plurality of second swing legs, the second swing leg includes a second leg assembly and a second wheel, each second wheel is in point contact with the second stair, and the plurality of second wheels are in line contact with the second stair. Therefore, the contact area between the second swing leg group and the second stair is a contact line.

**Operation 1003:** Control the first swing leg group to swing to the third stair by taking the second swing support leg as a support leg, where the third stair is higher than the second stair.

With reference to FIG. 5, parts (C), (D), and (E) of FIG. 4 show a process of controlling first swing leg group 10 to swing to the third stair F3 by using the second swing leg group 20 as a support leg.

Because the mobile robot does not tilt by only remaining the center of gravity in the stable area, an additional control algorithm is not needed. This is a biggest difference between static staircase ascending and the foregoing quasi-static staircase ascending.

**Operation 1004:** Control the mobile robot to tilt forward until the projection of the center of gravity of the mobile robot falls within a stable area bordered by a landing point of the first swing leg group on the third stair and a projection of a side wall of a fourth stair.

The foregoing operation 1002 and operation 1003 describe related operations of swinging the first swing leg group by using the second swing leg group as a support leg in the staircase ascending action process. Operation 1004 and operation 1005 are similarly implemented as related operations of swinging the second swing leg group by using the first swing leg group as a support leg in the staircase ascending action process.

FIG. 5 only shows a half cycle of a staircase ascending action. Similarly, a similar lower half cycle may be obtained. In a second half cycle, the second swing leg group is swung. For operation 1004, refer to the description of operation 1002.

The projection of the center of gravity of the mobile robot falls within a stable area formed by the first swing leg group and the side wall of the fourth stair. The stable area refers to an area bordered by a landing point of the first swing leg group and a projection of the side wall of the fourth stair. The first swing leg includes a first leg assembly and a first wheel, and the stable area includes an area bordered by the projections of the centers of circles of the plurality of first wheels and the side wall of the fourth stair.

In some embodiments, the first swing leg group includes a plurality of first swing legs, the first swing leg includes a first leg assembly and a first wheel, each first wheel is in point contact with the third stair, and the plurality of first wheels are in line contact with the third stair. Therefore, a contact area between the first swing leg group and the third stair is a contact line.

**Operation 1005:** Control the second swing leg group to swing to the fourth stair by using the first swing leg group as a support leg, where the fourth stair is higher than the third stair.

The second swing leg group is controlled to swing to the fourth stair by using the first swing leg group as a support leg. Because the mobile robot does not tilt by only remaining the center of gravity in the stable range, an additional control algorithm is not needed. This is a biggest difference between static staircase ascending and the foregoing quasi-static staircase ascending.

In conclusion, the foregoing solution provides a static staircase ascending solution. Before a swing leg ascends a staircase, the projection of the center of gravity of a robot is first moved to a stable area formed by the support leg and a side wall of a higher stair, and a solution of migrating the center of gravity of the robot is provided, so that the robot can continuously and stably ascend the staircase.

Moreover, the foregoing method is applicable to a robot with a wheel at a leg end, the wheel is in point contact with a stair surface, and a plurality of wheels are in line contact with the stair surface. The foregoing provides a method for static staircase ascending of a robot that is in line contact with the stair. In a static staircase ascending process, a tilt angle of the robot does not need to be detected, and opposite moment of a wheel motor does not need to be given, as long as a projection of a center of gravity falls within a stable area formed by the wheel and the side wall of the stair.

Based on an embodiment shown in FIG. 10, operation 1003 further includes: controlling, in a process of controlling the first swing leg group to swing to the third stair, the second swing leg group to be always supported by the third stair, to cause forces on the mobile robot to satisfy a first stability condition.

In some embodiments, an end of the second swing leg of the second swing leg group includes a second wheel, the second wheel has a second radius, and the second swing leg group is supported by the third stair through at least one second wheel. **The first stability condition includes:**

(1) a sum of a second support force and a first friction force is zero; the second support force is a support force from the side wall of the third stair, and the first friction force is a friction force from the stair surface of the second stair; a direction of the second support force is opposite to a direction of the first friction force; (2) a sum of a first support force, a second friction force, and gravity of the mobile robot is zero; the first support force is a support force from the stair surface of the second stair, and the second friction force is a friction force from the side wall of the third stair; a direction of the first support force and a direction of the second friction force are the same, a ratio of the second friction force to the second support force is less than or equal to a coefficient of friction, and a ratio of the first friction force to the first support force is less than or equal to a coefficient of friction; (3) a product of the second support force and the second radius is equal to a sum of a product of the second friction force and the second radius and a product of the gravity of the mobile robot and a forward tilt distance; the forward tilt distance is a horizontal distance between a center of gravity of the mobile robot and a center of a circle of the second wheel; (4) a product of the first support force and the second radius is equal to a sum of a product of the first friction force and the second radius and a product of the gravity of the mobile robot and a remaining distance; and a sum of the remaining distance and the forward tilt distance is the second radius.

The first stability condition is a stability condition that needs to be satisfied when the mobile robot swings the second swing leg group. FIG. 11 shows a schematic diagram of a force analysis of a mobile robot. In FIG. 11, $T_w$ is a torque of a second wheel, $F_{Nb}$ is a first support force. $F_{Nb}$ is from a stair surface of a second stair. $F_{Nc}$ is a second support force, and $F_{Nc}$ is from a side wall of a third stair. $F_{fb}$ is a first friction force, and $F_{fb}$ is from the stair surface of the second stair. $F_{fc}$ is a second friction force, and $F_{fc}$ is from the side wall of the third stair. G is gravity of the mobile robot, R is a radius of the second wheel, b is a forward tilt distance of the mobile robot, and b is a horizontal distance between a center of gravity of the mobile robot and a center of a circle of the second wheel. $\mu$ is a coefficient of friction of the stair. The foregoing first stability condition is expressed by using an equation as:

$$F_{Nc} + F_{fb} = 0; \qquad\qquad F_{Nb} \geq 0; \qquad \left|\frac{F_{fc}}{F_{Nc}}\right| \leq \mu;$$

$$F_{Nb} + F_{fc} + G = 0; \qquad\qquad F_{Nc} \leq 0; \qquad \left|\frac{F_{fb}}{F_{Nb}}\right| \leq \mu;$$

$$F_{Nc}R - F_{fc}R - Gb = 0;$$

$$F_{Nb}R - F_{fb}R - G(b - R) = 0;$$

Schematically, when the radius of the second wheel is R=82.5 mm, and the coefficient of friction $\mu$=0.5, a balance condition is b=0 mm to 49.5 mm. When the radius of the second wheel is R=82.5 mm, and $\mu$=0.8, b=0 mm to 72.5 mm. Therefore, an effective stability range of the center of gravity of the mobile robot is less than the radius R of the wheel, and is affected by the coefficient of friction.

Based on an embodiment shown in FIG. 10, operation 1005 further includes: controlling, in a process of controlling the second swing leg group to swing to the fourth stair, the first swing leg group to be always supported by the fourth stair, to cause the forces on the mobile robot to satisfy a second stability condition.

In some embodiments, an end of the first swing leg of the first swing leg group includes first wheel, the first wheel has a first radius, the first swing leg group is supported by the third stair through at least one first wheel. **The second stability condition includes:**

(1) a sum of a fourth support force and a third friction force is zero; the fourth support force is a support force from the side wall of the fourth stair, and the third friction force is a friction force from a stair surface of the second stair; a direction of the fourth support force is opposite to a direction of the third friction force; (2) a sum of a third support force, a fourth friction force, and gravity of the mobile robot is zero; the third support force is a support force from the stair surface of the second stair, and the fourth friction force is a friction force from the side wall of the fourth stair; a direction of the third support force and a direction of the fourth friction force are the same, a ratio of the fourth friction force to the fourth support force is less than or equal to a coefficient of friction, and a ratio of the third friction force to the third support force is less than or equal to a coefficient of friction; (3) a product of the fourth support force and the first radius is equal to a sum of a product of the fourth friction force and the first radius and a product of the gravity of the mobile robot and a forward tilt distance; the forward tilt distance is a horizontal distance between a center of gravity of the mobile robot and a center of a circle of the first wheel; (4) a product of the third support force and the first radius is equal to a sum of a product of the third friction force and the first radius and a product of the gravity of the mobile robot and a remaining distance; and a sum of the remaining distance and the forward tilt distance is the first radius.

The second stability condition is a stability condition that needs to be satisfied when the mobile robot swings the first swing leg group. FIG. 11 shows a schematic diagram of a force analysis of a mobile robot. In FIG. 11, $T_w$ is a torque of a first wheel, $F_{Nb}$ is a third support force, and $F_{Nb}$ is from a stair surface of a third stair. $F_{Nc}$ is a fourth support force, and $F_{Nc}$ is from a side wall of a fourth stair. $F_{fb}$ is a third friction force, and $F_{fb}$ is from a stair surface of the third stair. $F_{fc}$ is a fourth friction force, and $F_{fc}$ is from the side wall of the fourth stair. G is gravity of the mobile robot, R is a radius of the first wheel, b is a forward tilt distance of the mobile robot, and b is a horizontal distance between a center of gravity of the mobile robot and a center of a circle of the first wheel. $\mu$ is a coefficient of friction of the stair. The foregoing second stability condition is expressed by using an equation as:

$$F_{Nc} + F_{fb} = 0; \qquad F_{Nb} \geq 0; \qquad \left|\frac{F_{fc}}{F_{Nc}}\right| \leq \mu;$$

$$F_{Nb} + F_{fc} + G = 0; \qquad F_{Nc} \leq 0; \qquad \left|\frac{F_{fb}}{F_{Nb}}\right| \leq \mu;$$

$$F_{Nc}R - F_{fc}R - Gb = 0;$$

$$F_{Nb}R - F_{fb}R - G(b - R) = 0;$$

Schematically, when the radius of the first wheel is R=82.5 mm, and the coefficient of friction $\mu$=0.5, a balance condition is b=0 mm to 49.5 mm. When the radius of the first wheel is R=82.5 mm, and $\mu$=0.8, b=0 mm to 72.5 mm. Therefore, an effective stability range of the center of gravity of the mobile robot is less than the radius R of the wheel, and is affected by the coefficient of friction.

In conclusion, the foregoing method provides a stability condition in a static staircase ascending process of the mobile robot. In this case, compared with quasi-static staircase ascending, a tilt angle of the robot does not need to be detected, opposite moment of a wheel motor does not need to be provided, and stability feedback control does not need to be performed. It should be noted that the above various embodiments of the present application can be combined to form new embodiments arbitrarily, and these embodiments fall within the scope of the present application. It is further noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application

FIG. 12 shows an apparatus for controlling a mobile robot according to an exemplary embodiment of this application. The mobile robot includes a first swing leg group and a second swing leg group. At least one of the first swing leg group and the second swing leg group includes a plurality of swing legs, the first swing leg group and the second swing leg group are arranged in a side-by-side manner, and a rotation shaft of the first swing leg group and a rotation shaft of the second swing leg group are located in the same plane. The apparatus includes:
a control module 1201, configured to control the first swing leg group to be located on a first support surface, and control the second swing leg group to be located on a second support surface.

The control module 1201 is further configured to control the first swing leg group to swing to a third support surface by using the second swing leg group as a support leg.

The control module 1201 is further configured to control the second swing leg group to swing to a fourth support surface by using the first swing leg group as a support leg.

In an embodiment, the control module 1201 is further configured to control the first swing leg group to telescope and swing to the third support surface by using the second swing leg group as the support leg, and control the second swing leg group to telescope and swing to the fourth support surface by using the first swing leg group as the support leg.

In an embodiment, the control module 1201 is further configured to control the first swing leg group to shorten and swing by using the second swing leg group as a support leg until an extension direction of the first swing leg group is parallel to a direction of gravity, and control the first swing leg group to extend and swing until the first swing leg group is located on the third support surface.

The control module 1201 is further configured to control the second swing leg group to shorten and swing by using the first swing leg group as the support leg until an extension direction of the second swing leg group is parallel to a direction of gravity, and control the second swing leg group to extend and swing until the second swing leg group is located on the fourth support surface.

In an embodiment, the first support surface is a first stair, the second support surface is a second stair, the third support surface is a third stair, and the fourth support surface is a fourth stair, the second stair is higher than the first stair when the first swing leg group is located on the first stair; the second stair is higher than the first support surface when the first swing leg group is located on the first support surface; the second stair and the third stair are adjacent stairs, and the third stair is higher than the second stair; the second swing leg group is not in contact with a side wall of the third stair when being located on the second stair; the third stair and the fourth stair are adjacent stairs, and the fourth stair is higher than the third stair; and the first swing leg group is not in contact with a side wall of the fourth stair when being located on the third stair.

In an embodiment, the control module 1201 is further configured to control the mobile robot to tilt forward until a projection of a center of gravity of the mobile robot is located in a contact area between the second swing leg group and the second stair.

The control module 1201 is further configured to control the mobile robot to tilt forward until a projection of a center of gravity of the mobile robot is located in the contact area between the first swing leg group and the third stair.

In an embodiment, an end of the first swing leg of the first swing leg group includes a first wheel, and an end of the second swing leg of the second swing leg group includes a second wheel. The control module 1201 is further configured to control the mobile robot to tilt forward, and drive at least one first wheel of the first swing leg group and at least one second wheel of the second swing leg group to control a horizontal position and a vertical height of the mobile robot to remain unchanged until a projection of a center of gravity of the mobile robot is located in the contact area between the second swing leg group and the second stair.

The control module 1201 is further configured to control the mobile robot to tilt forward, and drive the at least one second wheel of the second swing leg group and the at least one first wheel of the first swing leg group, to control a horizontal position and a vertical height of the mobile robot to remain unchanged until a projection of a center of gravity of the mobile robot is located on a contact area between the first swing leg group and the third stair.

In an embodiment, the control module 1201 is further configured to drive the at least one first wheel of the first swing leg group to control the first swing leg group be stationary horizontally and the second swing leg group be stationary vertically until a stair contact force of the first swing leg group is less than a stair contact force of the second swing leg group. The at least one second wheel of the second swing leg group is driven to control the second swing leg group be stationary horizontally and the first swing leg group be stationary vertically until the projection of the center of gravity of the mobile robot is located in the contact area between the second swing leg group and the second stair.

The control module 1201 is further configured to drive the at least one second wheel of the second swing leg group to control the second swing leg group be stationary horizontally and the first swing leg group be stationary vertically until a stair contact force of the second swing leg group is less than a stair contact force of the first swing leg group. The at least one first wheel of the first swing leg group is driven to control the first swing leg group be stationary horizontally and the second swing leg group be stationary vertically until the projection of the center of gravity of the mobile robot is located in the contact area between the first swing leg group and the third stair.

In an embodiment, the control module 1201 is further configured to control, in a process of controlling the first swing leg group to swing to the third stair, the mobile robot to tilt forward until the first swing leg group is parallel to a direction of gravity, and control the mobile robot to tilt backward until the first swing leg group swings to the third stair.

The control module 1201 is further configured to control, in a process of controlling the second swing leg group to swing to the fourth stair, the mobile robot to tilt forward until the second swing leg group is parallel to a direction of gravity, and control the mobile robot to tilt backward until the second swing leg group swings to the fourth stair.

In an embodiment, an end of the first swing leg of the first swing leg group includes a first wheel, and an end of the second swing leg of the second swing leg group includes a second wheel. The control module 1201 is further configured to: drive, in a process of controlling the first swing leg group to swing to the third stair, the at least one second wheel of the second swing leg group to control the mobile robot to tilt forward until the first swing leg group is parallel to a direction of gravity, and to control the mobile robot to tilt backward until the first swing leg group swings to the third stair.

The control module 1201 is further configured to: drive, in a process of controlling the second swing leg group to swing to the fourth stair, the at least one first wheel of the first swing leg group to control the mobile robot to tilt forward until the second swing leg group is parallel to a direction of gravity, and to control the mobile robot to tilt backward until the second swing leg group swings to the fourth stair.

In an embodiment, the first support surface is a first stair, the second support surface is a second stair, the third support surface is a third stair, and the fourth support surface is a fourth stair, the second stair is higher than the first stair when the first swing leg group is located on the first stair; the second stair is higher than the first support surface when the first swing leg group is located on the first support surface; the second stair and the third stair are adjacent stairs, and the third stair is higher than the second stair; the second swing leg group is in contact with a side wall of the third stair when being located on the second stair; the third stair and the fourth stair are adjacent stairs, and the fourth stair is higher than the third stair; and the first swing leg group is not in contact with a side wall of the fourth stair when being located on the third stair.

In an embodiment, the control module 1201 is further configured to control the mobile robot to tilt forward until the projection of the center of gravity of the mobile robot falls within a stable area bordered by a landing point of the second swing leg group on the second stair and a projection of the side wall of the third stair. The control module 1201 is further configured to control the mobile robot to tilt forward until the projection of the center of gravity of the mobile robot falls within a stable area bordered by the landing point of the first swing leg group on the third stair and a projection of the side wall of the fourth stair.

In an embodiment, the control module 1201 is further configured to control, in a process of controlling the first swing leg group to swing to the third stair, the second swing leg group to be always supported by the third stair, to cause forces on the mobile robot to satisfy a first stability condition.

The control module 1201 is further configured to control, in a process of controlling the second swing leg group to swing to the fourth stair, the first swing leg group to be always supported by the fourth stair, to cause the forces on the mobile robot to satisfy a second stability condition.

In an embodiment, an end of the second swing leg of the second swing leg group includes a second wheel, the second wheel has a second radius, and the second swing leg group is supported on a third stair through at least one second wheel. The first stability condition includes: a sum of a second support force and a first friction force is zero; the second support force is a support force from the side wall of the third stair, and the first friction force is a friction force from the stair surface of the second stair; a direction of the second support force is opposite to a direction of the first friction force; a sum of a first support force, a second friction force, and gravity of the mobile robot is zero; the first support force is a support force from the stair surface of the second stair, and the second friction force is a friction force from the side wall of the third stair; a direction of the first support force and a direction of the second friction force are the same, a ratio of the second friction force to the second support force is less than or equal to a coefficient of friction, and a ratio of the first friction force to the first support force is less than or equal to a coefficient of friction; a product of the second support force and the second radius is equal to a sum of a product of the second friction force and the second radius and a product of the gravity of the mobile robot and a forward tilt distance; the forward tilt distance is a horizontal distance between a center of gravity of the mobile robot and a center of a circle of the second wheel; a product of the first support force and the second radius is equal to a sum of a product of the first friction force and the second radius and a product of the gravity of the mobile robot and a remaining distance; and a sum of the remaining distance and the forward tilt distance is the second radius.

In an embodiment, an end of the first swing leg of the first swing leg group includes a first wheel, the first wheel has a first radius, and the first swing leg group is supported by the fourth stair through at least one first wheel. The second stability condition includes: a sum of a fourth support force and a third friction force is zero; the fourth support force is a support force from the side wall of the fourth stair, and the third friction force is a friction force from a stair surface of the second stair; a direction of the fourth support force is opposite to a direction of the third friction force; a sum of a third support force, a fourth friction force, and gravity of the mobile robot is zero; the third support force is a support force from the stair surface of the second stair, and the fourth friction force is a friction force from the side wall of the fourth stair; a direction of the third support force and a direction of the fourth friction force are the same, a ratio of the fourth friction force to the fourth support force is less than or equal to a coefficient of friction, and a ratio of the third friction force to the third support force is less than or equal to a coefficient of friction; a product of the fourth support force and the first radius is equal to a sum of a product of the fourth friction force and the first radius and a product of the gravity of the mobile robot and a forward tilt distance; the forward tilt distance is a horizontal distance between a center of gravity of the mobile robot and a center of a circle of the first wheel; a product of the third support force and the first radius is equal to a sum of a product of the third friction force and the first radius and a product of the gravity of the mobile robot and a remaining distance; and a sum of the remaining distance and the forward tilt distance is the first radius.

In conclusion, two swing leg groups (at least one of the two swing leg groups includes a plurality of swing legs) ascend/descend alternately, and a solution for a mobile robot to ascend/descend is provided. In this solution, safety of the mobile robot is relatively high, difficulty in implementing ascending/descending is relatively low, the robot has a relatively large stability margin, and a real machine implementation risk can be reduced.

FIG. 13 shows a structural block diagram of a mobile robot according to an exemplary embodiment of this application. The mobile robot includes a controller 1301 and a memory 1302.

The controller 1301 may include one or more processing cores, for example, a 4-core processor or an 8-core processor. The controller 1301 may be implemented in at least one hardware form of a digital signal processor (DSP), a field-programmable gate array (FPGA), and a programmable logic array (PLA). The controller 1301 may alternatively include a main processor and a coprocessor. The main processor is a processor configured to process data in an awake state, and is alternatively referred to as a central processing unit (CPU). The coprocessor is a low power consumption processor configured to process the data in a standby state. In some embodiments, the controller 1301 may be integrated with a graphics processing unit (GPU). The GPU is configured to render and draw content that needs to be displayed on a display screen. In some embodiments, the controller 1301 may further include an artificial intelligence (AI) processor. The AI processor is configured to process computing operations related to machine learning.

The memory 1302 may include one or more computer-readable storage media. The computer-readable storage medium may be non-transient. The memory 1302 may further include a high-speed random access memory and a nonvolatile memory, for example, one or more disk storage devices or flash storage devices. In some embodiments, the non-transitory computer-readable storage medium in the memory 1302 is configured to store at least one instruction, and the at least one instruction is configured to be executed by the controller 1301 to implement the method for controlling a mobile robot according to method embodiments in this application.

In some embodiments, the mobile robot 1300 may include: at least one motor 1303 and at least one sensor 1304. The at least one motor 1303 is configured to receive a control instruction sent by the controller 1301, and drive the mobile robot to perform actions. The at least one motor 1303 drives each joint of the mobile robot to perform actions such as rotating/telescoping/fixing. The at least one sensor 1304 is configured to obtain state information of the mobile robot, where the state information includes an internal state of the mobile robot and/or an external state (environment information) of the mobile robot. The at least one sensor 1304 sends the state information of the mobile robot to the controller 1301 to control the mobile robot to perform related actions.

A person skilled in the art may understand that the structure shown in FIG. 13 does not constitute a limitation on the mobile robot 1300, and the mobile robot may include more or fewer components than those shown in the figure, or some components may be combined, or different component deployments may be used.

The embodiments of this application further provide a computer device. The computer device includes a memory and a processor. The memory has at least one piece of program code stored therein, and the program code is loaded and executed by the processor to implement the method for controlling a mobile robot described above.

The embodiments of this application further provide a computer-readable storage medium. The storage medium has a computer program stored therein. The computer program, when executed by a processor, implements the method for controlling a mobile robot described above.

The embodiments of this application further provide a chip. The chip includes a programmable logic circuit and/or program instruction. The chip, when running, is configured to implement the method for controlling a mobile robot described above.

The embodiments of this application further provide a computer program product or a computer program. The computer program product or the computer program includes a computer instruction. The computer instruction is stored in a computer-readable storage medium, and a processor reads and executes the computer instruction from the computer-readable storage medium to implement the method for controlling a mobile robot described above.

## Claims

1. A method for controlling a mobile robot, the mobile robot comprising a first swing leg group and a second swing leg group; at least one of the first swing leg group and the second swing leg group comprising a plurality of swing legs; the first swing leg group and the second swing leg group being arranged in a side-by-side manner, and a rotation shaft of the first swing leg group and a rotation shaft of the second swing leg group being located in a same plane; the method being executable by a controller of the mobile robot, and the method comprising:

   controlling the first swing leg group to be located on a first support surface, and controlling the second swing leg group to be located on a second support surface;
   controlling the first swing leg group to swing to a third support surface by using the second swing leg group as a support leg; and
   controlling the second swing leg group to swing to a fourth support surface by using the first swing leg group as a support leg.

2. The method according to claim 1, wherein the controlling the first swing leg group to swing to a third support surface by using the second swing leg group as a support leg comprises:

   controlling the first swing leg group to telescope and swing to the third support surface by using the second swing leg group as the support leg; and
   the controlling the second swing leg group to swing to a fourth support surface by using the first swing leg group as a support leg comprises:
   controlling the second swing leg group to telescope and swing to the fourth support surface by using the first swing leg group as the support leg.

3. The method according to claim 2, wherein the controlling the first swing leg group to telescope and swing to the third support surface by using the second swing leg group as the support leg comprises:

   controlling the first swing leg group to retract and swing by using the second swing leg group as the support leg, until an extension direction of the first swing leg group is parallel to a direction of gravity; and controlling the first swing leg group to extend and swing, until the first swing leg group is located on the third support surface; and

the controlling the second swing leg group to telescope and swing to a fourth support surface by using the first swing leg group as the support leg comprises:

controlling the second swing leg group to retract and swing by using the first swing leg group as the support leg, until an extension direction of the second swing leg group is parallel to the direction of gravity; and controlling the second swing leg group to extend and swing, until the second swing leg group is located on the fourth support surface.

4. The method according to any one of claims 1 to 3, wherein the first support surface is a first stair, the second support surface is a second stair, the third support surface is a third stair, and the fourth support surface is a fourth stair,

the second stair is higher than the first stair when the first swing leg group is located on the first stair;
the second stair is higher than the first support surface when the first swing leg group is located on the first support surface;
the second stair and the third stair are adjacent stairs, and the third stair is higher than the second stair; the second swing leg group is not in contact with a side wall of the third stair when being located on the second stair;
the third stair and the fourth stair are adjacent stairs, and the fourth stair is higher than the third stair; and the first swing leg group is not in contact with a side wall of the fourth stair when being located on the third stair.

5. The method according to claim 4, wherein before the controlling the first swing leg group to swing to a third support surface by using the second swing leg group as a support leg, the method further comprises:

controlling the mobile robot to tilt forward, until a projection of a center of gravity of the mobile robot is located in a contact area between the second swing leg group and the second stair; and
wherein before the controlling the second swing leg group to swing to a fourth support surface by using the first swing leg group as a support leg, the method further comprises:
controlling the mobile robot to tilt forward, until the projection of the center of gravity of the mobile robot is located in a contact area between the first swing leg group and the third stair.

6. The method according to claim 5, wherein an end of the first swing leg in the first swing leg group comprises a first wheel, and an end of the second swing leg in the second swing leg group comprises a second wheel; the controlling the mobile robot to tilt forward, until a projection of a center of gravity of the mobile robot is located in a contact area between the second swing leg group and the second stair comprises:

controlling the mobile robot to tilt forward, and driving at least one first wheel of the first swing leg group and at least one second wheel of the second swing leg group, to control a horizontal position and a vertical height of the mobile robot to remain unchanged, until the projection of the center of gravity of the mobile robot is located in the contact area between the second swing leg group and the second stair; and
the controlling the mobile robot to tilt forward until the projection of the center of gravity of the mobile robot is located in a contact area between the first swing leg group and the third stair comprises:
controlling the mobile robot to tilt forward, and driving at least one second wheel of the second swing leg group and at least one first wheel of the first swing leg group, to control a horizontal position and a vertical height of the mobile robot to remain unchanged, until the projection of the center of gravity of the mobile robot is located on the contact area between the first swing leg group and the third stair.

7. The method according to claim 6, wherein the driving at least one first wheel of the first swing leg group and at least one second wheel of the second swing leg group, to control a horizontal position and a vertical height of the mobile robot to remain unchanged, until the projection of the center of gravity of the mobile robot is located in the contact area between the second swing leg group and the second stair comprises:

driving the at least one first wheel of the first swing leg group to control the first swing leg group be stationary horizontally and the second swing leg group be stationary vertically, until a stair contact force of the first swing leg group is less than a stair contact force of the second swing leg group; and
driving the at least one second wheel of the second swing leg group to control the second swing leg group be stationary horizontally and the first swing leg group be stationary vertically, until a projection of a center of gravity of the mobile robot is located in the contact area between the second swing leg group and the second stair; and
the driving at least one second wheel of the second swing leg group and at least one first wheel of the first swing leg group to control a horizontal position and a vertical height of the mobile robot to remain unchanged, until the projection of the center of gravity of the mobile robot is located in the contact area between the first swing leg group and the third stair comprises:

driving the at least one second wheel of the second swing leg group to control the second swing leg group be stationary horizontally and the first swing leg group be stationary vertically, until a stair contact force of the second swing leg group is less than a stair contact force of the first swing leg group; and

driving the at least one first wheel of the first swing leg group to control the first swing leg group be stationary horizontally and the second swing leg group be stationary vertically, until the projection of the center of gravity of the mobile robot is located in the contact area between the first swing leg group and the third stair.

8. The method according to any one of claims 4 to 7, further comprising:

controlling, in a process of controlling the first swing leg group to swing to the third stair, the mobile robot to tilt forward until the first swing leg group is parallel to a direction of gravity, and controlling the mobile robot to tilt backward until the first swing leg group swings to the third stair; and

controlling, in a process of controlling the second swing leg group to swing to the fourth stair, the mobile robot to tilt forward, until the second swing leg group is parallel to the direction of gravity, and controlling the mobile robot to tilt backward until the second swing leg group swings to the fourth stair.

9. The method according to claim 8, wherein an end of the first swing leg in the first swing leg group comprises a first wheel, and an end of the second swing leg in the second swing leg group comprises a second wheel; the controlling, in a process of controlling the first swing leg group to swing to the third stair, the mobile robot to tilt forward until the first swing leg group is parallel to a direction of gravity, and controlling the mobile robot to tilt backward until the first swing leg group swings to the third stair comprises:

driving, in a process of controlling the first swing leg group to swing to the third stair, at least one second wheel of the second swing leg group to control the mobile robot to tilt forward until the first swing leg group is parallel to the direction of gravity, and to control the mobile robot to tilt backward until the first swing leg group swings to the third stair; and

the controlling, in a process of controlling the second swing leg group to swing to the fourth stair, the mobile robot to tilt forward until the second swing leg group is parallel to the direction of gravity, and controlling the mobile robot to tilt backward until the second swing leg group swings to the fourth stair comprises:

driving, in a process of controlling the second swing leg group to swing to the fourth stair, at least one first wheel of the first swing leg group to control the mobile robot to tilt forward until the second swing leg group is parallel to the direction of gravity, and to control the mobile robot to tilt backward until the second swing leg group swings to the fourth stair.

10. The method according to any one of claims 1 to 3, wherein the first support surface is a first stair, the second support surface is a second stair, the third support surface is a third stair, and the fourth support surface is a fourth stair,

the second stair is higher than the first stair when the first swing leg group is located on the first stair;

the second stair is higher than the first support surface when the first swing leg group is located on the first support surface;

the second stair and the third stair are adjacent stairs, and the third stair is higher than the second stair; the second swing leg group is in contact with a side wall of the third stair when being located on the second stair;

the third stair and the fourth stair are adjacent stairs, and the fourth stair is higher than the third stair; and the first swing leg group is in contact with a side wall of the fourth stair when being located on the third stair.

11. The method according to claim 10, wherein before the controlling the first swing leg group to swing to a third support surface by using the second swing leg group as a support leg, the method further comprises:

controlling the mobile robot to tilt forward until a projection of a center of gravity of the mobile robot falls within a stable area bordered by a landing point of the second swing leg group on the second stair and a projection of a side wall of the third stair on the second stair; and

before the controlling the second swing leg group to swing to a fourth support surface by using the first swing leg group as a support leg, further comprising:

controlling the mobile robot to tilt forward until the projection of the center of gravity of the mobile robot falls within the stable area bordered by a landing point of the first swing leg group on the third stair and a projection of a side wall of the fourth stair on the third stair.

**12.** The method according to claim 10, further comprising:

controlling, in a process of controlling the first swing leg group to swing to the third stair, the second swing leg group to be always supported by the third stair, to cause forces on the mobile robot to satisfy a first stability condition; and
controlling, in a process of controlling the second swing leg group to swing to the fourth stair, the first swing leg group to be always supported by the fourth stair, to cause the forces on the mobile robot to satisfy a second stability condition.

**13.** The method according to claim 12, wherein an end of a second swing leg in the second swing leg group comprises a second wheel, the second wheel has a second radius, and the second swing leg group is supported by the third stair through at least one second wheel; and the first stability condition comprises:

a sum of a second support force and a first friction force is zero; the second support force is a support force from the side wall of the third stair, and the first friction force is a friction force from a stair surface of the second stair; a direction of the second support force is opposite to a direction of the first friction force;
a sum of a first support force, a second friction force, and gravity of the mobile robot is zero; the first support force is a support force from the stair surface of the second stair, and the second friction force is a friction force from the side wall of the third stair; a direction of the first support force and a direction of the second friction force are the same, a ratio of the second friction force to the second support force is less than or equal to a coefficient of friction, and a ratio of the first friction force to the first support force is less than or equal to a coefficient of friction;
a product of the second support force and the second radius is equal to a sum of a product of the second friction force and the second radius and a product of the gravity of the mobile robot and a forward tilt distance; the forward tilt distance is a horizontal distance between a center of gravity of the mobile robot and a center of a circle of the second wheel;
a product of the first support force and the second radius is equal to a sum of a product of the first friction force and the second radius and a product of the gravity of the mobile robot and a remaining distance; and a sum of the remaining distance and the forward tilt distance is the second radius.

**14.** The method according to claim 12, wherein an end of a first swing leg in the first swing leg group comprises a first wheel, the first wheel has a first radius, and the first swing leg group is supported by the fourth stair through at least one first wheel; and the second condition comprises:

a sum of a fourth support force and a third friction force is zero; the fourth support force is a support force from the side wall of the fourth stair, and the third friction force is a friction force from a stair surface of the second stair; a direction of the fourth support force is opposite to a direction of the third friction force;
a sum of a third support force, a fourth friction force, and gravity of the mobile robot is zero; the third support force is a support force from the stair surface of the second stair, and the fourth friction force is a friction force from the side wall of the fourth stair; a direction of the third support force and a direction of the fourth friction force are the same, a ratio of the fourth friction force to the fourth support force is less than or equal to a coefficient of friction, and a ratio of the third friction force to the third support force is less than or equal to a coefficient of friction;
a product of the fourth support force and the first radius is equal to a sum of a product of the fourth friction force and the first radius and a product of the gravity of the mobile robot and the forward tilt distance; the forward tilt distance is a horizontal distance between a center of gravity of the mobile robot and a center of a circle of the first wheel;
a product of the third support force and the first radius is equal to a sum of a product of the third friction force and the first radius and a product of the gravity of the mobile robot and a remaining distance; and a sum of the remaining distance and the forward tilt distance is the first radius.

**15.** An apparatus for controlling a mobile robot, the mobile robot comprising a first swing leg group and a second swing leg group; at least one of the first swing leg group and the second swing leg group comprising a plurality of swing legs; the first swing leg group and the second swing leg group being arranged in a side-by-side manner, and a rotation shaft of the first swing leg group and a rotation shaft of the second swing leg group being located in the same plane; the apparatus comprising:

a control module, configured to control the first swing leg group to be located on a first support surface, and control the second swing leg group to be located on a second support surface;
the control module being further configured to control the first swing leg group to swing to a third support surface by using the second swing leg group as a support leg; and

the control module being further configured to control the second swing leg group to swing to a fourth support surface by using the first swing leg group as a support leg.

16. The apparatus according to claim 15, wherein the controlling module is further configured to:

control the first swing leg group to telescope and swing to the third support surface by using the second swing leg group as the support leg; and
controlling the second swing leg group to telescope and swing to the fourth support surface by using the first swing leg group as the support leg.

17. The apparatus according to claim 16, wherein the controlling module is further configured to:

control the first swing leg group to retract and swing by using the second swing leg group as the support leg until an extension direction of the first swing leg group is parallel to a direction of gravity; control the first swing leg group to extend and swing until the first swing leg group is located on the third support surface;
control the second swing leg group to retract and swing by using the first swing leg group as the support leg until an extension direction of the second swing leg group is parallel to the direction of gravity; and control the second swing leg group to extend and swing until the second swing leg group is located on the fourth support surface.

18. A mobile robot, comprising a memory and a processor,
the memory having at least one piece of program code stored therein, and the program code being loaded and executed by the processor to implement the method for controlling a mobile robot according to any one of claims 1 to 14.

19. A computer-readable storage medium, having a computer program stored therein, the computer program being executed by a processor to implement the method for controlling a mobile robot according to any one of claims 1 to 14.

20. A chip, comprising at least one of a programmable logic circuit and/or program instructions, and configured to implement the method for controlling a mobile robot according to any one of claims 1 to 14 when an electronic device installed with the chip runs.

Central axis

1(2)

111

112

113

10

20

211

212

213

FIG. 1

FIG. 2

320

Control a first swing leg group to be located on a first support surface, and control a second swing leg group to be located on a second support surface

340

Control the first swing leg group to swing to a third support surface by using the second swing leg group as a support leg

360

Control the second swing leg group to swing to a fourth support surface by using the first swing leg group as a support leg

FIG. 3

(A)         (B)         (C)         (D)         (E)

Staircase ascending action sequence

FIG. 4

(A)         (B)         (C)         (D)         (E)

Staircase ascending action sequence

FIG. 5

610

Control a first swing leg group to be located on a first stair, and control a second swing leg group to be located on a second stair, where the second stair is higher than the first stair; or, control the first swing leg group to be located on a first support surface, and control the second swing leg group to be located on the second stair, where the second stair is higher than the first support surface

620

Control a mobile robot to tilt forward until a projection of a center of gravity of the mobile robot is located in a contact area between the second swing leg group and the second stair

630

Control the first swing leg group to swing to a third stair by taking the second swing support leg as a support leg, where the third stair is higher than the second stair

640

Control the mobile robot to tilt forward until the projection of the center of gravity of the mobile robot is located in a contact area between the first swing leg group and the third second stair

650

Control the second swing leg group to swing to a fourth stair by using the first swing leg group as a support leg, where the fourth stair is higher than the third stair

FIG. 6

Front
wheel
torque

Back
wheel
torque

Actual front wheel
ground clearance

Actual back
wheel position

Expected back
wheel position

Back
wheel
torque

Front
wheel
torque

Actual back wheel
ground clearance

Actual front
wheel position

Expected front
wheel position

(A)

(B)

FIG. 7

82

A stair contact force of
back wheel is less than
a stair contact force of a
front wheel

Expected front wheel position, and
expected front wheel speed
Expected back wheel ground
clearance, and a first-order differential
of expected back wheel ground
clearance

Actual front wheel position, actual front wheel speed, actual back wheel ground
clearance, and first-order differential of actual back wheel ground clearance

PD 801

Front wheel
torque

Dynamic
simulator 802

81

The stair contact force
of the back wheel is
greater than the stair
contact force of the
front wheel

Expected back wheel position, and
expected back wheel speed
Expected front wheel ground clearance,
and first-order differential of expected
front wheel ground clearance

PD 801

Back wheel
torque

Actual back wheel position, actual back wheel speed,
actual front wheel ground clearance, and first-order
differential of actual front wheel ground clearance

Stair contact
force of front
wheel, and stair
contact force of
back wheel

FIG. 8

θ

Expected robot position
Expected robot speed

+
−

PI 901

Expected included angle
First-order differential of
expected included angle

+
−

PD 902

Wheel
torque

Dynamic
simulator 903

Actual included angle
First-order differential of
actual included angle

Actual robot
position
Actual robot
speed

(A)

(B)

FIG. 9

Control a first swing leg group to be located on a first stair, and control a second swing leg group to be located on a second stair, where the second stair is higher than the first stair; or, control the first swing leg group to be located on a first support surface, and control the second swing leg group to be located on the second stair, where the second stair is higher than the first support surface — 1001

Control a mobile robot to tilt forward until a projection of a center of gravity of the mobile robot falls within a stable area bordered by a landing point of the second swing leg group on the second stair and a projection of a side wall of a third stair — 1002

Control the first swing leg group to swing to the third stair by taking the second swing support leg as a support leg, where the third stair is higher than the second stair — 1003

Control the mobile robot to tilt forward until the projection of the center of gravity of the mobile robot falls within a stable area bordered by a landing point of the first swing leg group on the third stair and a projection of a side wall of a fourth stair — 1004

Control the second swing leg group to swing to the fourth stair by using the first swing leg group as a support leg, where the fourth stair is higher than the third stair — 1005

## FIG. 10

## FIG. 11

Control module — 1201

## FIG. 12

Mobile robot

Memory — 1302

Controller — 1301   Sensor — 1304

Motor — 1303

## FIG. 13

## INTERNATIONAL SEARCH REPORT

| International application No. |
| --- |
| **PCT/CN2023/131479** |

### A. CLASSIFICATION OF SUBJECT MATTER

G05D1/08(2006.01)i

According to International Patent Classification (IPC) or to both national classification and IPC

### B. FIELDS SEARCHED

Minimum documentation searched (classification system followed by classification symbols)

IPC: G05D

Documentation searched other than minimum documentation to the extent that such documents are included in the fields searched

Electronic data base consulted during the international search (name of data base and, where practicable, search terms used)

CNTXT, ENTXTC, DWPI, CJFD: 楼梯, 台阶, 机器人, 重心, 重力, 水平, 高度, 接触区域, 投影, 摆动腿, 支撑腿, 支撑力, 摩擦力, 半径, 乘积, 前倾, 控制装置, 控制模块, 存储器, 处理器, 计算机程序, 存储介质, 芯片, stair, step, robot, center, gravity, horizontal, height, contact, area, projection, swing, leg, support, force, friction, radius, product, tilt, control, module, memory, processor, computer, program, storage, medium, chip

### C. DOCUMENTS CONSIDERED TO BE RELEVANT

| Category* | Citation of document, with indication, where appropriate, of the relevant passages | Relevant to claim No. |
| --- | --- | --- |
| X | JP 2007130701 A (ISHIKAWAJIMA HARIMA HEAVY INDUSTRY CO., LTD.) 31 May 2007 (2007-05-31) description, paragraphs 17-37, and figures 1-6 | 1-5, 8-12, 15-17 |
| Y | JP 2007130701 A (ISHIKAWAJIMA HARIMA HEAVY INDUSTRY CO., LTD.) 31 May 2007 (2007-05-31) description, paragraphs 17-37, and figures 1-6 | 18-20 |
| Y | CN 115480560 A (TENCENT TECHNOLOGY (SHENZHEN) CO., LTD.) 16 December 2022 (2022-12-16) claims 14 and 15, and description, paragraph 229 | 18-20 |
| A | CN 113172635 A (LEJU (SHENZHEN) ROBOT TECHNOLOGY CO., LTD.) 27 July 2021 (2021-07-27) entire document | 1-20 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 December 2023** | **21 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/131479** |

### C. DOCUMENTS CONSIDERED TO BE RELEVANT

| Category* | Citation of document, with indication, where appropriate, of the relevant passages | Relevant to claim No. |
|---|---|---|
| A | CN 109202901 A (XIAMEN UNIVERSITY OF TECHNOLOGY) 15 January 2019 (2019-01-15) <br> entire document | 1-20 |
| A | JP 2003266337 A (NATIONAL INSTITUTE OF ADVANCED INDUSTRIAL & TECHNOLOGY) 24 September 2003 (2003-09-24) <br> entire document | 1-20 |
| A | JP 2007130724 A (ISHIKAWAJIMA HARIMA HEAVY INDUSTRY CO., LTD.) 31 May 2007 (2007-05-31) <br> entire document | 1-20 |
| A | JP 2007130725 A (ISHIKAWAJIMA HARIMA HEAVY INDUSTRY CO., LTD.) 31 May 2007 (2007-05-31) <br> entire document | 1-20 |
| A | WO 2023273107 A1 (UBTECH ROBOTICS CORP., LTD.) 05 January 2023 (2023-01-05) <br> entire document | 1-20 |

Form PCT/ISA/210 (second sheet) (July 2022)

EP 4 614 269 A1

**INTERNATIONAL SEARCH REPORT**
Information on patent family members

International application No.

**PCT/CN2023/131479**

| Patent document cited in search report | | | Publication date (day/month/year) | Patent family member(s) | | | Publication date (day/month/year) |
|---|---|---|---|---|---|---|---|
| JP | 2007130701 | A | 31 May 2007 | JP | 4743605 | B2 | 10 August 2011 |
| CN | 115480560 | A | 16 December 2022 | None | | | |
| CN | 113172635 | A | 27 July 2021 | None | | | |
| CN | 109202901 | A | 15 January 2019 | None | | | |
| JP | 2003266337 | A | 24 September 2003 | JP | 3918049 | B2 | 23 May 2007 |
| JP | 2007130724 | A | 31 May 2007 | JP | 4766381 | B2 | 07 September 2011 |
| JP | 2007130725 | A | 31 May 2007 | JP | 4692925 | B2 | 01 June 2011 |
| WO | 2023273107 | A1 | 05 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310472257